# EUROPEAN PATENT SPECIFICATION

(11) **EP 1 398 279 B1**
(45) Date of publication and mention of the grant of the patent: **29.06.2005**
(21) Application number: 03077674.4
(22) Date of filing: 25.08.2003
(51) Int. Cl.: B65D 85/804

(54) **Form-retaining pad for preparing a beverage suitable for consumption**
Starre Kartusche für die Zubereitung eines Getränkes
Cartouche rigide pour la préparation d'une boisson propre à la consommation

(30) Priority: 23.08.2002 NL 1021325
(43) Date of publication of application: 17.03.2004
(73) Proprietor: Sara Lee/DE N.V., 3532 AA Utrecht (NL)
(72) Inventor: Steenhof, Vincent Jan, 5215 AD 's Hertogenbosch (NL); Kok, Bernardus Henricus, 6957 DM Laag Soeren (NL); Knitel, Joseph Theodoor, 3531 VC Utrecht (NL)
(74) Representative: Prins, Adrianus Willem, Mr. Ir.

(56) References cited:
- EP-A- 0 398 530
- WO-A-00/51478
- US-A- 4 446 158
- US-A- 5 082 676
- US-A- 5 895 672
- US-A1- 2001 053 399

## Description

The invention relates to a pad for preparing a beverage suitable for consumption, provided with at least one first covering, in which a substance, such as milk powder/creamer, sugar and similar additives, which is soluble in a liquid, such as water, is included, the covering being provided with a top sheet, manufactured from a material non-transmissive to the soluble substance, such as a layer of filter material, and with a bottom sheet, manufactured from a material non-transmissive to the soluble substance per se, but transmissive to the substance dissolved in a liquid, such as a layer of filter material.

Such a pad is known per se. The known pad is intended for use in a machine known per se, such as a coffee maker, for preparing the beverage suitable for consumption. Here, the pad is placed in a holder of the machine, after which hot water is supplied to the holder by means of the machine. Then, the hot water flows through a top filter sheet to an inner space of the covering in which the water-soluble substance is present. This substance dissolves in the water and then leaves the pad through a bottom filter sheet. The holder is provided with, for instance, at least one outlet opening through which the water with the substance dissolved therein can flow out of the holder.

A disadvantage of the known pad is that, in use, a considerable part of the water-soluble substance does not dissolve. The result is that, after preparation of the beverage suitable for consumption, a considerable part of the substance remains in the pad unused.

It is an object of the invention to provide a form-retaining pad, allowing a larger part of the substance to dissolve when preparing an amount of beverage suitable for consumption than with the known pad, when the same amounts of beverage suitable for consumption are prepared with the known pad and the pad according to the invention.

For this purpose, in accordance with the invention, a form-retaining pad is provided for preparing a beverage suitable for consumption, provided with at least one first covering, in which, in a liquid, such as water, soluble substance, such as milk powder/creamer, sugar and similar additives, is included, the covering comprising a top sheet, manufactured from a material non-transmissive to the soluble substance, such as a layer of filter material, and a bottom sheet, manufactured from a material non-transmissive to the soluble substance, but transmissive to the substance dissolved in a liquid, such as a layer of filter material, the pad being further provided with a form-providing stiffening body, placed between the top sheet and the bottom sheet, the top sheet and the bottom sheet extending at least partly substantially parallel to each other and to a surface, the stiffening body having a top side adjacent to the top sheet and a bottom side adjacent to the bottom sheet, and, by provision of a compartmenting wall configuration therein, having a grid structure transmissive to liquid from the top side to the bottom side, in which structure at least a part of the soluble substance is accommodated and each compartment formed by the wall configuration is surrounded by that wall configuration, the top sheet and the bottom sheet. The measures according to the invention, that is, using a more or less block or disc-shaped stiffening body with good permeability, but also with a dividing and separating pattern for the soluble substance, are found to result in a larger part of that substance being dissolved when the liquid flows through than in the known pad. The possible cause of this is that the water flows through the pad with a better spread and/or that, as a result of the compartmenting wall configuration, the formation of relatively large lumps, that is, lumps larger than the passages in the grid structure transmissive to liquid, is prevented.

According to a further embodiment of the invention, a preference is expressed with regard to the important wall configuration that at least a part of the compartmenting wall configuration is formed by a grid which forms a plurality of compartments. In this manner, the stiffening body can be divided in a suitable manner into any desired transmissive grid with mutually separated compartments. In addition, it is also possible for at least a part of the compartmenting wall configuration to be formed by a spiral-shaped wall. In that case, it is possible to create a single long continuous compartment with a width suitable for the purpose. In fact, this involves a grid in which a plurality of neighboring compartments are interconnected and form the long continuous compartment, for instance by at least one opening in walls between these neighboring compartments. Of course, it is also possible to design a grid to be combined with an outer, inner or interposed spiral. Elongated compartments with a suitable width can also be realized by a configuration of parallel walls. Which specific wall configuration effects the most complete dissolution of the soluble substance in a specific case of application depends on the nature of the soluble substance(s), the supplied liquid and other factors, such as pressure and temperature.

Lumps often consist of a powder core, surrounded by a viscous mass which inhibits relatively fast dissolution of the powder core. In order to reduce the chance of such lumping together of the soluble substance, a relatively fine passage structure is preferred, that is, it can offer advantages according to a further embodiment of the invention, if each compartment formed by the wall configuration, measured perpendicular to a part of the wall configuration, has a width which is smaller than a third, preferably smaller than a quarter, more preferably smaller than a sixth, even more preferably smaller than an eighth of the hydraulic diameter, with hydraulic diameter being understood to mean the value obtained by four times dividing the surface by the perimeter of the stiffening body. In fact, this means that each particle of the soluble substance in the transmissive grid structure is located at a distance closer than the width referred to from a surface of the wall configuration. By keeping this distance relatively small, the diameter of a lump possibly starting to form will be relatively small, with the result that this lump will probably not be formed, or, due to its relatively small dimensions, and therefore small or no powder core, will dissolve quickly.

Preferably, neighboring compartments are separated by a single wall. In this manner, the inner space of the covering is optimally utilized to be filled with the substance. In other words, here, the wall configuration can take up a relatively small volume part of the inner part of the pad.

In particular, further, the top sheet is fixed to a top side of the stiffening body and the bottom sheet is fixed to a bottom side of the stiffening body. Here, the top sheet and the bottom sheet respectively can be fixed to the stiffening body near a longitudinal edge of the top sheet and the bottom sheet respectively. Further, in particular, the top sheet is fixed to a top side of the wall configuration and the bottom sheet is fixed to a bottom side of the wall configuration. Here, it is even possible for the top sheet and the bottom sheet to be connected to the edges of the compartments located near the openings so that the compartments are closed by the top sheet and bottom sheet. When the substance is powdery, this means that the substance cannot, for instance, move from one compartment to another compartment.

In particular, the pad is further provided with a second covering manufactured at least partly from a sheet-shaped filter material, in which the product to be extracted, such as ground coffee, is included, with the second covering extending above or under the first covering substantially parallel to the surface. When the substance consists of a milk powder/creamer and/or sugar and the product to be extracted of ground coffee, such a form-retaining pad is extremely suitable for preparing cappuccino. Here, in use, when, for instance, the second covering is located above the first covering, hot water is supplied under pressure to the top side of the second covering. In the second covering, this hot water forms a coffee extract which then flows to the first covering under the influence of the pressure, where the substance will dissolve in the coffee extract. The coffee extract with the substance dissolved therein then leaves the form-retaining pad through the bottom sheet of the first covering. The beverage obtained in this manner (coffee with dissolved substance) is now ready for consumption. However, the beverage can also be supplied to the apparatus described in European patent application 0 878 158 and by means of which air is whipped into the beverage to obtain a small-bubbled foam layer on the beverage. The beverage obtained in this manner is a cappuccino which is ready for consumption. Also, the beverage can be supplied to other known apparatuses to undergo further processing. For preparing the beverage, the form-retaining pad can be included in a holder known per se, which holder is provided with at least one outlet opening. In particular, this at least one outlet opening can form the spout opening described in European patent application 0 878 158 for obtaining a jet of the beverage which spouts into a buffer reservoir for obtaining a beverage with a small-bubbled foam layer.

In particular, the second embodiment is provided with a second covering provided with a top sheet manufactured at least partly from sheet-shaped filter material and a bottom sheet from sheet-shaped filter material, the top sheet and the bottom sheet being interconnected and preferably being interconnected at their longitudinal edges and more preferably being directly interconnected, with the interconnected parts forming a circular joint.

A further preferred embodiment of the invention can be obtained by providing the bottom side of the stiffening body with a bulging part, which is formed by increasing the height of a central part of the compartmenting wall configuration and has a surface extending parallel to aforesaid surface. If the central part is further arranged in a receded position relative to a bottom edge of a circumferential wall of the stiffening body such that the bottom side of the compartmenting wall configuration between the edge of the central surface and the bottom edge of the circumferential wall recedes relative to a line drawn between that edge of the central surface and that bottom edge of the circumferential wall and the bottom sheet extends over the central surface and from the edge thereof to the bottom edge of the circumferential wall, which preferably projects in an annular manner, and is fixed on or near this on the stiffening body, an annular channel is created between the wall configuration and the bottom sheet, which can promote the discharge of the liquid with the substance dissolved therein. Also in this embodiment, a further covering for including a substance to be extracted can be provided on the top sheet, with, if desired, the bottom side of that covering being formed by said top sheet.

Should it be desired to further refine the spread of the liquid over the stiffening body provided with the compartmenting wall configuration, then a separating body with a number of passages, more in particular a water distribution plate, such as a shower head plate, can be provided, while the separating body can form at least a part of the top sheet, or be additionally arranged on or under the top sheet.

Generally, the top sheet of the form-retaining pad will be formed by a layer of filter material, such as filter paper. However, it is also possible for the form-retaining pad to be designed with a top sheet consisting of a layer of material non-transmissive to liquid, which is provided in a withdrawable manner. In particular, this possibility can be used when a covering with a substance to be extracted, such as ground coffee, is placed on the form-retaining pad, with the filter layer of that covering then covering the then open top side of the form-retaining pad. When the stiffening body is suitably designed, it can be suitable for reuse in this design. This is because the open top side offers the possibility to sprinkle a soluble substance in the grid structure formed by the compartmenting wall configuration.

The invention also relates to an assembly of a form-retaining pad and an extraction pad manufactured at least partly from sheet-shaped filter material which is filled with a product to be extracted such as ground coffee. Here, a size of the extraction pad in a width direction of the extraction pad is preferably larger than a size of the form-retaining pad in a direction of the said surface of the form-retaining pad. Such an assembly can preferably be used for preparing coffee with hot milk, more in particular for preparing cappuccino. For this purpose, the product to be extracted is provided with ground coffee and the soluble substance is, for instance, provided with milk powder/creamer. Here, for instance, the form-retaining pad can be placed in a holder, with the extraction pad then being placed on top of the form-retaining pad. Then, for instance, hot water is supplied to the top side of the holder. This hot water is pressed through the extraction pad so that coffee extract is formed. Then, this coffee extract flows through the form-retaining pad so that the substance dissolves in the coffee extract. Because the substance is provided with milk powder/creamer, coffee extract with milk is formed in this manner. The beverage thus suitable for consumption can leave the holder via an outlet opening of the holder. It is again possible to supply the beverage obtained in this manner under pressure to the apparatus described in the abovementioned European patent application 0 878 158 for obtaining a beverage with a small-bubbled foam layer, in particular for obtaining cappuccino. Here as well, the outlet opening of the holder can be designed as the spout opening described in European patent application 0 878 158. The said assembly can also be offered to the consumer in one package.

The invention also relates to a method for preparing a beverage suitable for consumption using a form-retaining pad or an assembly, as discussed above, where an amount of a substance, such as milk powder/creamer, sugar and similar additives, which is soluble in a liquid, such as water, is accommodated in the form-retaining pad comprising a grid structure transmissive to liquid, formed by a compartmenting wall configuration, in a stiffening body covered in a closing manner by a top sheet and a bottom sheet, as well as an amount of substance to be extracted, such as ground coffee, accommodated in a covering, are placed in a holder, then a liquid, such as hot water is supplied, preferably under pressure, to the holder, in particular from a top side thereof, to the two substances, after which the beverage obtained in this manner is tapped via at least one outlet opening in a bottom side of the holder. Preferably, the covering is placed above the form-retaining pad, while it can be preferred that the beverage obtained can be discharged through a discharge opening designed as a spout opening such that a small-bubbled foam layer is obtained. Also, the covering can be placed under the form-retaining pad. As has already been discussed in the foregoing, such a method with a spout opening is particularly suitable for obtaining cappuccino. The form-retaining pad can be joined to form a whole with the covering or be used with a separate covering, while both the covering and the pad can be intended for single use, but the form-retaining pad with a design with a withdrawable top sheet can also be intended for repeated use.

It is noted that, although a pad with a stiffening body is known from EP-A-0 398 530, US-A-4,446,158, WO-A-00/51478 and US-A-5,082,676, this concerns a pad for including a product to be extracted, more in particular ground coffee. However, in such a pad, the problem of lumping does not occur. The known stiffening bodies referred to are thus provided with only a few stiffening ribs, which form rather large compartments and are substantially intended to give a pad which is freely suspended in a holder sufficient resistance to bending. As discussed above, the form-retaining pad according to the invention is *inter alia* intended to be placed in a holder in a supported manner, with the stiffening body preventing lumping, but also having an additional advantageous effect. The substance dissolved in the liquid leaves the pad, so that the pad would in effect be empty after dissolution and discharge of the soluble substance. However, in a position supported in a holder, the form-retaining pad, in its turn, needs to support a second covering placed above it containing a product to be extracted such as ground coffee. A pad which is drained during the preparation of the beverage could disturb the extraction process. However, the presence of the stiffening body in the thus form-retaining pad according to the invention ensures that this problem does not occur. This also applies when the form-retaining pad is borne by the holder while the second covering is located under the form-retaining pad in the holder and is also borne by the holder.

With reference to embodiments shown in the drawing, but only by way of non-limiting examples, the invention will now be explained in more detail. In this drawing:
Fig. 1 shows a cross-section of a first embodiment of a form-retaining pad according to the invention;
Fig. 2 shows a top plan view of the stiffening body of the pad according to Fig. 1;
Fig. 3 shows, in perspective, the grid of the form-retaining pad according to Fig. 1;
Fig. 4 shows a detail of the grid of the form-retaining pad according to Fig. 1;
Fig. 5 shows a cross-section of a second embodiment of a form-retaining pad according to the invention;
Fig. 6 shows a cross-section of a third embodiment of a form-retaining pad according to the invention;
Fig. 7 shows a cross-section of a fourth embodiment of a form-retaining pad according to the invention;
Fig. 8 shows a cross-section of a fifth embodiment of a form-retaining pad according to the invention;
Fig. 9 shows a cross-section of a sixth embodiment of a form-retaining pad according to the invention;
Fig. 10a shows a cross-section of a possible embodiment of an assembly included in a holder according to the invention, which assembly comprises a form-retaining pad according to the invention and an extraction pad;
Fig. 10b shows a top plan view of the extraction pad of the assembly according to Fig. 10a;
Fig. 11 shows a cross-section of a form-retaining pad and an extraction pad according to the invention included in a holder for preparing cappuccino;
Fig. 12 shows a top plan view of a first alternative stiffening body of the form-retaining pads according to Figs. 1-9;
Fig. 13 shows a top plan view of a second alternative stiffening body of the form-retaining pads according to Figs. 1-9;
Figs. 14a-14c show a cross-section of a ninth, tenth and eleventh embodiment of a form-retaining pad according to the invention respectively;
Fig. 15 shows a top plan view of a stiffening body of a twelfth embodiment of a form-retaining pad according to the invention;
Fig. 16 shows cross-section along the line XVI-XVI in Fig. 15;
Fig. 17 shows the parts, including a stiffening body according to Figs. 15 and 16, for forming an assembled pad;
Fig. 18 shows the pad consisting of the parts shown in Fig. 17 in assembled form;
Fig. 19a shows a top plan view of a second alternative stiffening body of the form-retaining pad according to Figs. 1-9;
Fig. 19b shows a side view of the stiffening body according to Fig. 19b;
Fig. 20a shows a top plan view of a separating body which can be provided on a top side of a stiffening body; and
Fig. 20b shows a side view of the separating body according to Fig. 20a.

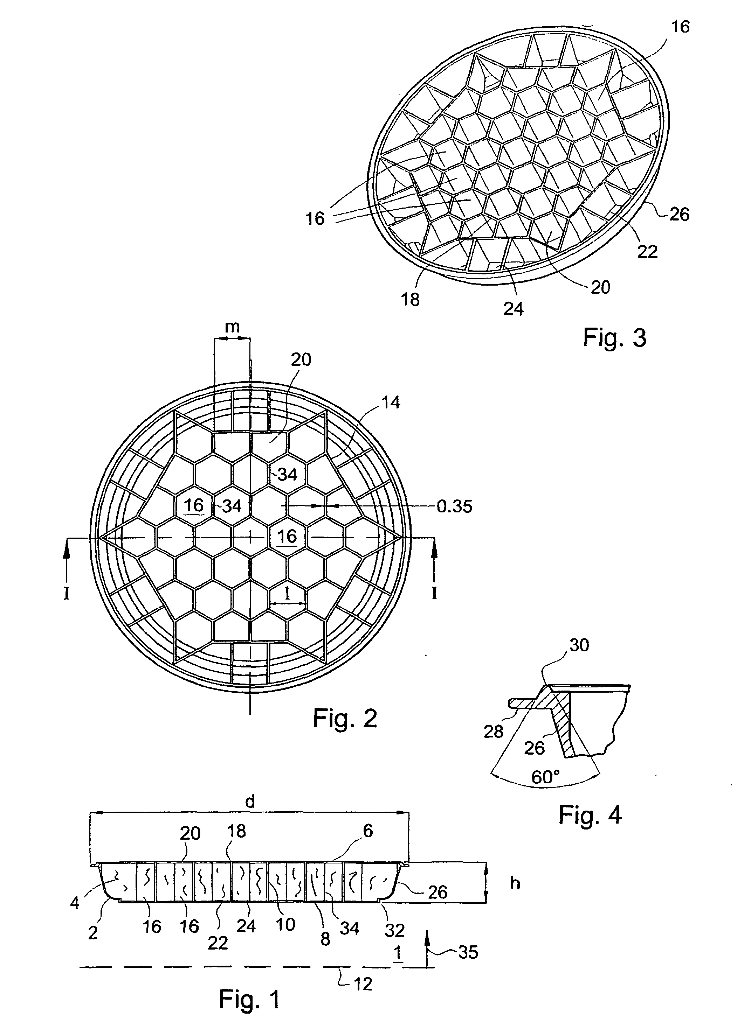

In Fig. 1, reference numeral 1 designates a form-retaining pad for preparing a beverage suitable for consumption according to the invention. The form-retaining pad 1 is provided with at least one first covering 2 in which a water-soluble substance 4 is included. In this example, the water-soluble substance consists of milk powder/creamer. Other substances, such as powders for preparing drinking chocolate and other beverages suitable for consumption are also conceivable. Also, substances in other forms than powder form are possible such as concentrates and extracts.

The covering 2 comprises a top sheet 6 manufactured from sheet-shaped filter material and a bottom sheet 8 manufactured from sheet-shaped filter material. In this example, the top sheet 6 and the bottom sheet 8 are each manufactured from filter paper. However, other filter materials such as filter materials of a synthetic are also possible. The form-retaining pad is further provided with a stiffening body 10 which is included between the top sheet and bottom sheet. The top sheet and bottom sheet each extend at least partly substantially parallel to a surface 12.

The stiffening body 10 is provided with a compartmenting wall configuration extending parallel to the surface 12 and formed by a grid 14 (see Fig. 2 and Fig. 3), a plurality of compartments 16 being provided in the grid. Each compartment 16 is provided with an opening 20 in a top side 18 of the grid 14. Also, each compartment is provided with an opening 24 in a bottom side 22 of the grid. The top side of the stiffening body is adjacent to the top sheet 6 and the bottom side of the stiffening body is adjacent to the bottom sheet 8. More in particular, the top side 18 of the grid is adjacent to the top sheet 6 and the bottom side 22 of the grid 14 is adjacent to the bottom sheet 8. The compartmenting wall configuration thus comprises a grid structure which is transmissive to liquid from the top side to the bottom side.

In this example, the stiffening body is provided with an upstanding side wall 26 extending around a side of the grid. Further, the stiffening body is provided with a horizontal edge 28 extending around a side of the grid. The stiffening body is further provided on the top side with an upstanding edge 30 extending upwards which is in fact in line with the upstanding side wall 26. The top sheet is fixed to a top side of the stiffening body. In this example, the top sheet 6 is fixed, near its longitudinal edges, to the upstanding edge 30. The stiffening body is further provided, on its bottom side, with a circular edge 32 extending downwards. The bottom sheet is fixed to a bottom side of the stiffening body. In this example, the bottom sheet 8 is fixed to the edge 32 extending downwards. In this example, further, the top sheet is moreover fixed to a top side of the grid and the bottom sheet is moreover fixed to a bottom side of the grid. Furthermore, a number of the compartments have a honeycomb structure. Further, in this example, neighboring compartments are each separated from one another by single side walls 34. In this example, each of the compartments is filled with a water-soluble substance such as milk powder/creamer.

Furthermore, the pad 1 has a flat shape, with the pad having larger dimensions in the direction of the surface 12 than in a direction 35 perpendicular to the surface 12.

In this example, the grid / the compartmenting wall configuration is manufactured from a synthetic, such as plastic. However, the grid / the compartmenting wall configuration can also be manufactured from other materials such as metal, rubber, cardboard and/or a biodegradable material. In particular, the entire stiffening body is manufactured from a synthetic such as plastic, metal, rubber, cardboard and/or a biodegradable material. Further, in the example, the form-retaining pad has a disc-shaped (the shape of a round disc) design. The pad has, for instance, a diameter d of 40-80 mm, in particular a diameter of approximately 60 mm. The height of the pad is, for instance, 5-20 mm, in particular approximately 7 mm. A diameter I of the compartments forming a honeycomb structure is, for instance, 5-10 mm and preferably approximately 7 mm.

The form-retaining pad can be used in a manner known per se for preparing a beverage suitable for consumption. Thus, the pad can, for instance, be placed in the holder which is open on its top side and which is provided with at least one outlet opening in its bottom side. Such holders are known per se and are usually used in machines known per se for preparing a beverage suitable for consumption, such as espresso machines and other types of machines. By means of the machine, for instance, hot water can supplied under pressure to a top side of the holder. This hot water penetrates the form-retaining pad through the top sheet, with the substance dissolving in the water. The hot water with the substance dissolved therein can then leave the form-retaining pad via the bottom sheet and can then leave the holder via the at least one outlet opening. As a result of the compartments, here, a relatively large part of the substance will dissolve in the water. The beverage suitable for consumption which leaves the holder can then be collected in a container such as a cup. However, it is also possible for the beverage from the holder to be supplied to a spout opening for preparing a beverage suitable for consumption with a small-bubbled foam layer, such as for instance described in European patent application 0 878 158. Here, the outlet opening of the holder can, for instance, be designed as the spout opening.

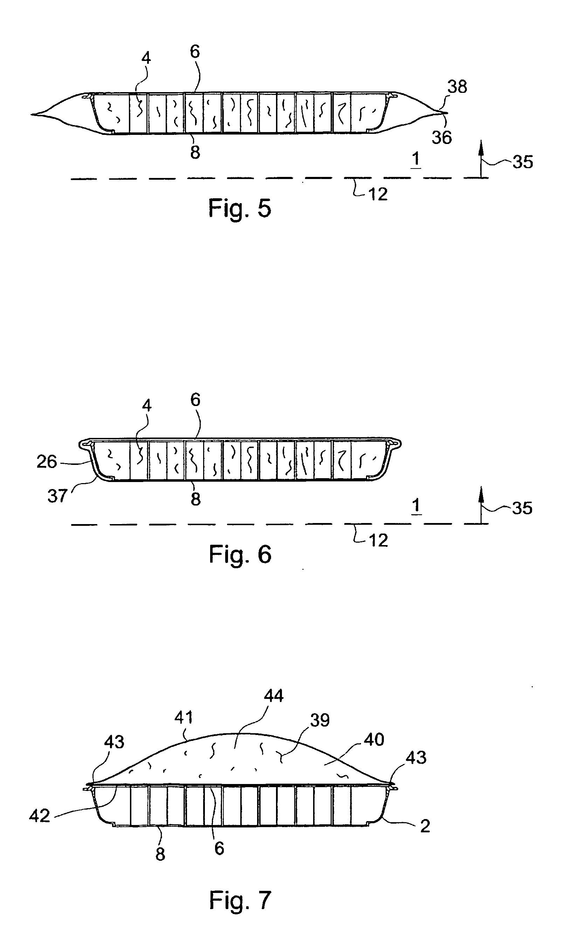

In the example of Fig. 1, the top sheet 6 and the bottom sheet 8 are interconnected by interposition of the upstanding side wall 26. However, it is also possible for the top sheet 6 and the bottom sheet 8 to be directly interconnected. This is shown in Fig. 5. In Fig. 5, the bottom sheet 8 and the top sheet 6 are interconnected and, in this example, interconnected at longitudinal edges 36 of the top and bottom sheet and, in this example, moreover, directly connected to each other, the interconnected parts forming a circular joint 38. Here, the top sheet and/or the bottom sheet can also be connected to the top side 18 of the grid 14 and the bottom side 22 of the grid 14 respectively as discussed with reference to Fig. 1.

Fig. 6 shows an alternative embodiment of the pad according to Figs. 1-4. In Figs. 1 and 6, a number of corresponding parts are designated by the same reference numerals. In the pad according to Fig. 6, the top sheet 6 and the bottom sheet 8 are connected to an outer side 37 of the upstanding wall. The top sheet 6 and the bottom sheet 8 respectively can optionally further be connected to a top side and a bottom side of the grid (optionally at a few points).

So, as discussed, the top sheet can be fixed to the stiffening body in various manners. For instance, it is possible for the top sheet to be connected (optionally only) to a top side of the grid. It is also possible for the top sheet to be connected (optionally only) to a top side of the upstanding side wall. In addition, it is possible for the top sheet to be connected (optionally only) to an outer side of the upstanding side wall. In particular, in the latter two options, the top sheet is also fixed to a top side of the grid. In the latter case, it is further possible for the top sheet to be fixed to only a few points of the top side of the grid. It is also possible for the top sheet and bottom sheet to be directly fixed to each other.

Also, as discussed, the bottom sheet can be fixed to the stiffening body in various manners. For instance, it is possible for the bottom sheet to be connected (optionally only) to a bottom side of the grid. It is also possible for the bottom sheet to be connected (optionally only) to a bottom side of the upstanding side wall. In addition, it is possible for the bottom sheet to be connected (optionally only) to an outer side of the upstanding side wall. In particular, in the latter two options, the bottom sheet is also fixed to a bottom side of the grid. In the latter case, it is further possible for the bottom sheet to be fixed to the bottom side of the grid to only a few points.

In particular, the pad is further provided with a second covering 39 as shown in Fig. 7. In this example, the covering 39 is manufactured from sheet-shaped filter material. This sheet-shaped filter material can, for instance, be provided with filter paper. However, other sheet-shaped filter materials such as synthetic filter materials are also possible. In the second covering, a product to be extracted 40 such as coffee or tea is included. In this example, however, the product to be extracted is ground coffee 40. In this example, the second covering 39 is located above the first covering 2 and extends at least substantially parallel to the surface 12. In Fig. 7, the first covering 2 corresponds to the covering 2 discussed with reference to Figs. 1-4. The second covering is provided with a top sheet 41 manufactured from sheet-shaped filter material and a bottom sheet 42 manufactured from sheet-shaped filter material. The top sheet 41 can, for instance, be manufactured from filter paper. This also applies to the bottom sheet 42. The top sheet 41 and the bottom sheet 42 are interconnected at.their longitudinal edges, the interconnected parts forming a circular joint 43. The first and second covering are interconnected. In the pad according to Fig. 7, this has been realized because the bottom sheet 42 of the second covering 39 consists of the top sheet 6 of the first covering 2. It is also possible for the second covering 39 to be located under the first covering 2. In particular, the top sheet 41 of the second covering 39 then consists of the bottom sheet 8 of the first covering 2.

The form-retaining pad according to Fig. 7 can preferably be used for preparing coffee with milk. For this purpose, the form-retaining pad according to Fig. 7 is, for instance, placed in a holder known per se of, for instance, an espresso machine in the above-described manner. Then, hot water is supplied to a top side of the holder, preferably under pressure. In this manner, the water is supplied to both substances of the first and second covering. In this example, the hot water flows, at least partly, through the top sheet 41 to an inner space 44 of the second covering, where the coffee extract is formed. This coffee extract leaves the second covering 39 via the bottom sheet 42 and then enters the first covering 2 because the bottom sheet 42 also forms the top sheet of the first covering 2. In the first covering 2, the coffee extract flows through the compartments, where the substance will dissolve in the coffee extract and coffee with milk is formed. Then, this coffee with milk flows out of the pad 1 of Fig. 7 via the bottom sheet 8. Then, the coffee with milk can leave the holder via the at least one outlet opening of the holder. Thus, an amount of substance, such as milk powder/creamer, sugar and similar additives, soluble in a liquid, such as water, which is accommodated in the form-retaining pad comprising a grid structure transmissive to liquid, formed by a compartmenting wall configuration, in a stiffening body, covered in a closing manner by a top sheet and a bottom sheet, as well as a substance to be extracted, such as ground coffee, accommodated in a second covering, are placed in a holder, and then a liquid, such as hot water, is supplied to the holder to the two substances, in particular from a top side of the holder and preferably under pressure, after which the beverage obtained in this manner is tapped via at least one outlet opening in a bottom side of the holder. As discussed above, the beverage obtained in this manner can also be supplied to an apparatus for obtaining a beverage with a small-bubbled foam layer, as described in, for instance, European patent application 0 878 158. In this manner, cappuccino can be formed. Here, the outlet opening of the holder can be designed as the spout opening of the apparatus according to this European patent publication. When the second covering is placed below the first covering in the holder known per se and water is supplied to a top side of the holder, the water will first of all flow through the first covering, causing the substance in the first covering to dissolve, and the water will then flow through the extraction pad. In this case, the liquid is first supplied to the soluble substance and then to the substance to be extracted.

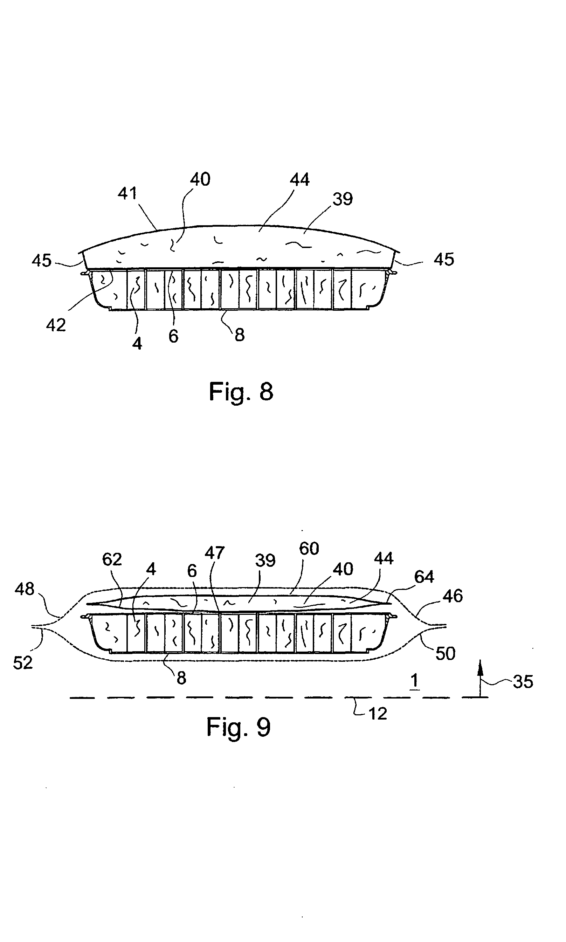

Fig. 8 shows an alternative embodiment of the form-retaining pad of Fig. 7 filled with a product to be extracted 40. The pad of Fig. 8 is also provided with a second covering 39. The stiffening body is further provided with an annular upstanding edge 45. To a top side of the upstanding edge 45, the top sheet 41 of the second covering 39 is fixed. Here, the bottom sheet 42 of the second covering also consists of the top sheet 6 of the first covering 2.

Fig. 9 shows a second alternative embodiment for the form-retaining pad of Fig. 7. In Fig. 9 as well, the form-retaining pad is provided with a second covering 39 manufactured from sheet-shaped filter material such as filter paper, in which a product to be extracted such as ground coffee or tea 40 is included. In this example, the product to be extracted is ground coffee. Here as well, the second covering extends above the first covering at least substantially parallel to the surface 12. The first covering 2 corresponds to the covering as discussed with reference to Figs. 1-3. However, the first covering 2 can also be designed as discussed with reference to Figs. 5 and 6. The second covering 39 is again provided with a top sheet 60 manufactured from sheet-shaped filter material such as filter paper and a bottom sheet 62 manufactured from sheet-shaped filter material such as filter paper. In this example, however, the bottom sheet 62 consists of another sheet than the top sheet 6 of the first covering. The bottom sheet 62 and the top sheet 6 can be fixed to each other in a manner known per se, such as, for instance, by means of an adhesive connection 47. It is also possible for the combination of the first covering 2 and the second covering 39 to be included in a third covering 46. In this example, the third covering 46 is provided with a top sheet 48 manufactured from a sheet-shaped filter material such as filter paper and a bottom sheet 50 manufactured from sheet-shaped filter material such as filter paper. The bottom sheet 50 and the top sheet 48 are interconnected near their longitudinal edges. These longitudinal edges form a circular joint 52. In this example, the first covering 2 and the second covering 39 are kept together by the third covering 46 and the first covering 2 and the second covering 39 are not necessarily directly interconnected.

The form-retaining pad of Fig. 9 can likewise preferably be used, in each of its variants, for preparing coffee with milk and in particular for preparing cappuccino as discussed with reference to Fig. 7.

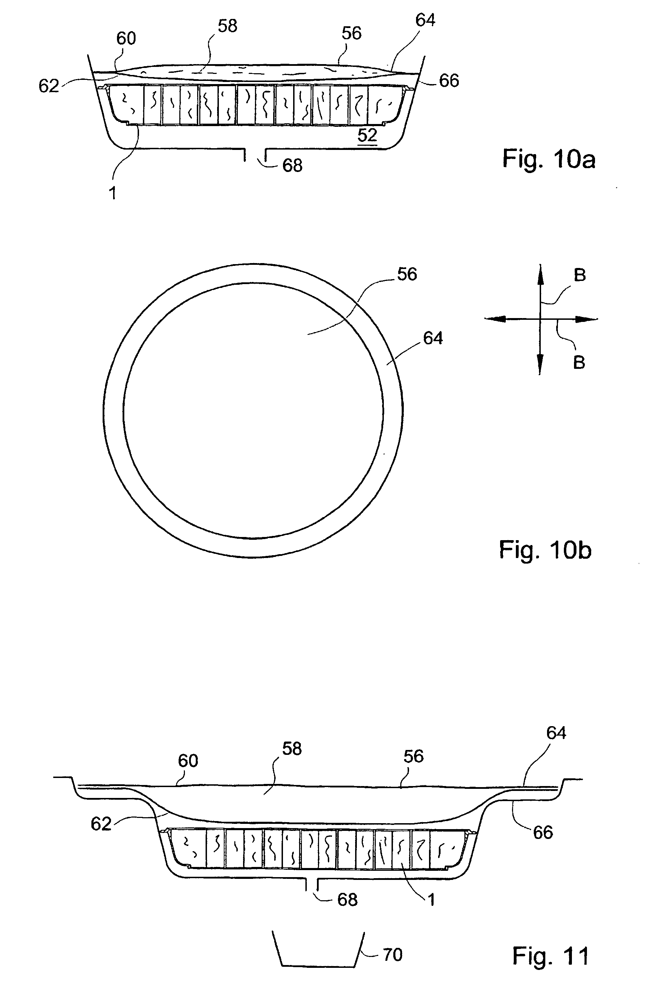

Fig. 10a shows an assembly according to the invention. The assembly 54 is provided with a form-retaining pad 1 of a type as discussed with reference to Figs. 1-4 or, for instance, Fig. 5 or Fig. 6. The assembly is further provided with an extraction pad 56 known per se filled with a product to be extracted, such as for instance ground coffee. The extraction pad known per se is manufactured from sheet-shaped filter material such as filter paper and is, in this example, filled with ground coffee 58. A size of the extraction pad in a width direction B (see Fig. 10b) of the extraction pad is at least as large as and, in this example, corresponds to the size of the form-retaining pad in the direction of the said surface 12. In this example, the form-retaining pad 1 and the extraction pad 56 each have a disc-shaped design, with the form-retaining pad and extraction pad having an at least virtually equal diameter. The extraction pad known per se 56 is again provided with a top sheet 60 manufactured from sheet-shaped filter material such as filter paper and a bottom sheet 62 manufactured from sheet-shaped filter material such as filter paper, the top sheet and the bottom sheet being interconnected near their longitudinal edges, the connected parts forming a joint 64.

Because the size of the extraction pad in the width direction B of the extraction pad is at least as large as and, in this example, corresponds to the size of the form-retaining pad in the direction of the surface 12, the form-retaining pad and the extraction pad can simply be included in a holder 66 provided with at least one outlet opening 68. The form-retaining pad 1 then rests on the bottom of the holder, while the extraction pad 56 is positioned on top of the form-retaining pad (see Fig. 10a). Then, hot water can be supplied to the top side of the holder for preparing the beverage suitable for consumption. In particular, the water is supplied under pressure. This pressure can assume the usual values for preparing espresso or coffee using the Senseo system. An additional advantage of the form-retaining pad in the examples is that the form of the form-retaining pad does not change or does not change substantially when the soluble substance dissolves and leaves the form-retaining pad. Therefore, the extraction process is not uncontrollably affected because a displacement and/or deformation of the extraction pad resulting from a deformation of the form-retaining pad does not occur or at least hardly occurs. This does not only apply when the extraction pad rests upon the form-retaining pad in the holder, but also when the form-retaining pad in the holder is supported by the holder while the extraction pad is located in the holder under the form-retaining pad. Fig. 11 also shows a holder known per se 66 in which the form-retaining pad 1 as well the extraction pad 56 of Fig. 10a are included. Because of the specific shape of the holder 66, in this example, the extraction pad 56 has a larger diameter than the form-retaining pad 1. This allows the extraction pad 56 to be positioned above (upstream of) the form-retaining pad. As said, hot water can be supplied (under pressure) to a top side of the holder 66, which hot water flows, at least partly, successively through the extraction pad 56 and the form-retaining pad 1, so that coffee extract and coffee extract with milk are formed successively. The coffee extract with milk leaves the holder 66 via the outlet opening 68 of the holder. In particular, the outlet opening 68 is designed as a spout opening known per se as described in European patent application 0 878 158. With this, a jet of coffee extract with milk is formed which spouts into a buffer reservoir 70 for obtaining a coffee extract with milk with a small-bubbled foam layer. In particular, in this example, cappuccino is formed in this manner. Instead of the assembly according to Fig. 10a, the form-retaining pad according to Fig. 7, 8 or 9 can also be used to fill the holder 66. Such variants are each considered to be within the scope of the invention.

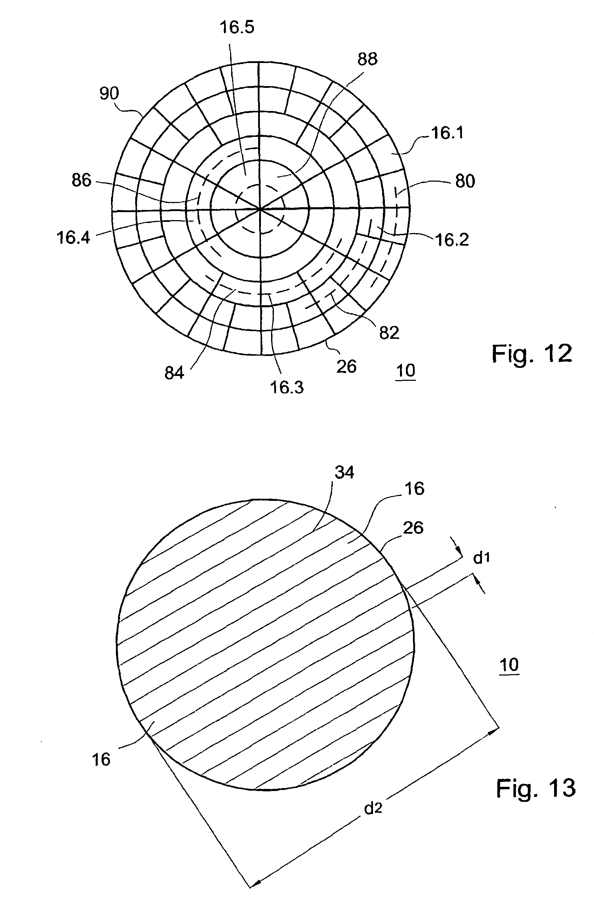

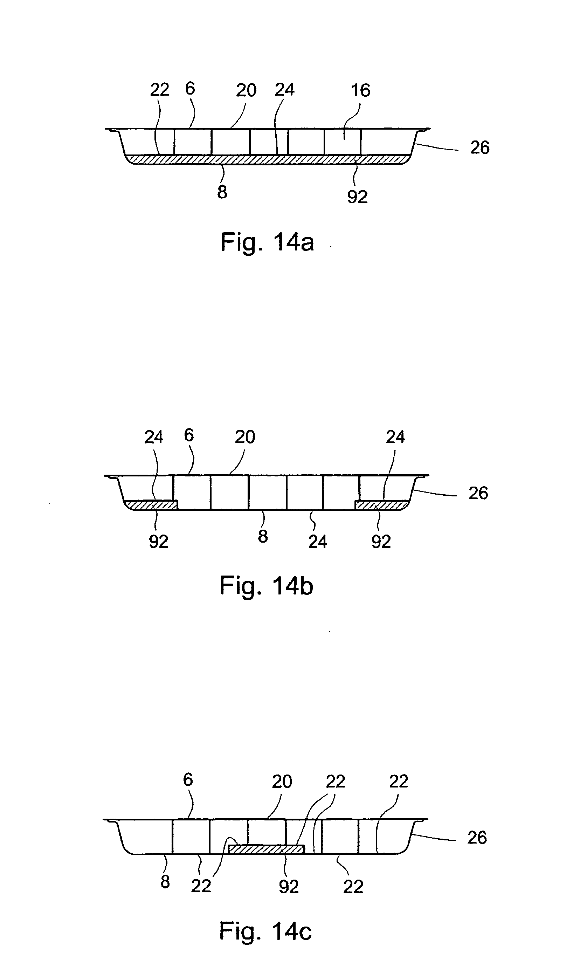

Fig. 12 shows a stiffening body 10 which can replace the stiffening body 10 of the pads according to Figs. 1-9 to obtain alternative form-retaining pads according to the invention. The stiffening body is provided with compartments 16.1 located on an outer ring 80, compartments 16.2 located on a ring 82 within the outer ring, compartments 16.3 located on a ring 84 within the ring 82, compartments 16.4 located on a ring 86 within the ring 84 and compartments 16.5 located on a ring 88 within the ring 86. The compartments 16.1 and 16.2 are smaller than the compartments 16.3. Also the compartments 16.3 are smaller than the compartments 16.4. So, the stiffening body comprises a plurality of relatively small compartments (16.1 & 16.2 and 16.3 respectively) which are located at a relatively short distance from a circular edge 90 of the stiffening body and the stiffening body comprises a plurality of relatively large compartments (16.4 and 16.5 respectively) which are located at a relatively long distance from the circular edge. It has been found that, for instance, in use according to Figs. 10 and 11, a relatively large part of the substance dissolves. In particular, the substance present in the compartments located at a relatively short distance from the circular edge also dissolves well. It has been found that a water flow through these compartments is sometimes hindered because, in use, the form-retaining pad lies on the bottom of the holder 66 at the location of these compartments. The surface of the compartments 16.1 is, for instance, 25-55 mm² and preferably 40 mm². The compartments 16.2, 16.3 and 16.4 are 35-66 mm² and preferably 50 mm², 45-75 mm² and preferably 60 mm², and 55-85 mm² and preferably 70 mm² respectively. Fig. 13 shows that the grid can also comprise compartments 16 which have an elongated design and are directed at least virtually parallel to each other. Here, for instance, it applies that d2>>d1. Figs 14a-14c show examples in which the bottom sheet 8 does not abut the grid everywhere. In those places where the bottom sheet 8 does not abut the grid, receiving spaces 92 are shown which can each, at least partly, be filled with the substance 4.

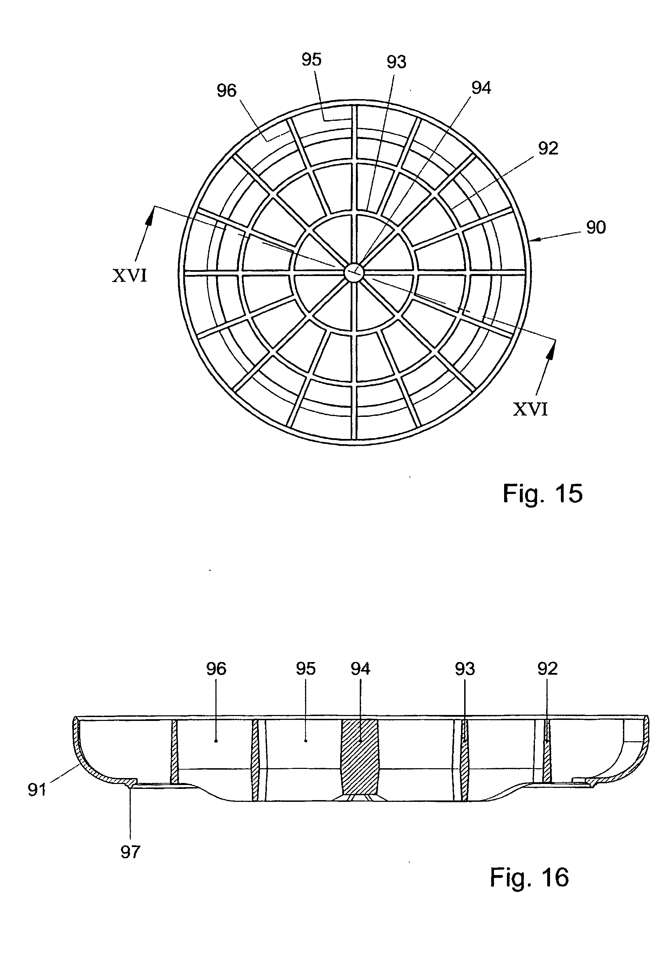

The stiffening body 90 shown in top plan view in Fig. 15 is provided with an annular circumferential wall 91, with two further annular walls 92 and 93 concentrically extending within the circumferential wall 91. From a central pen 94, eight walls 95 extend in a radially rotation-symmetrically distributed manner to the circumferential wall 91. In the middle between each two walls 95, a radially extending wall 96 is provided between the annular wall 93 and the circumferential wall 91. As shown in Fig. 16, the circumferential wall has a curved cross-section, so the circumferential wall 91 has an open dish shape with an open bottom, with a circular edge 97 extending downwards having formed near the circumference of the open bottom. Further, it is visible from Fig. 16 that the annular wall 93 has a greater height than the annular wall 92, with the annular wall 93 projecting through the said open bottom. The walls 95 and 96 follow the profile thus formed by the annular walls, the difference in height between the annular walls 95 and 96 being compensated on the bottom side by a smooth transition in the shape of an extended S. Thus, the stiffening body 90 is provided with bulging central part in relation to the circumferential wall 91. Further, the central pen 94 is has a somewhat shorter design than the annular wall 93, so the compartments adjacent to the central pen 94 are interconnected.

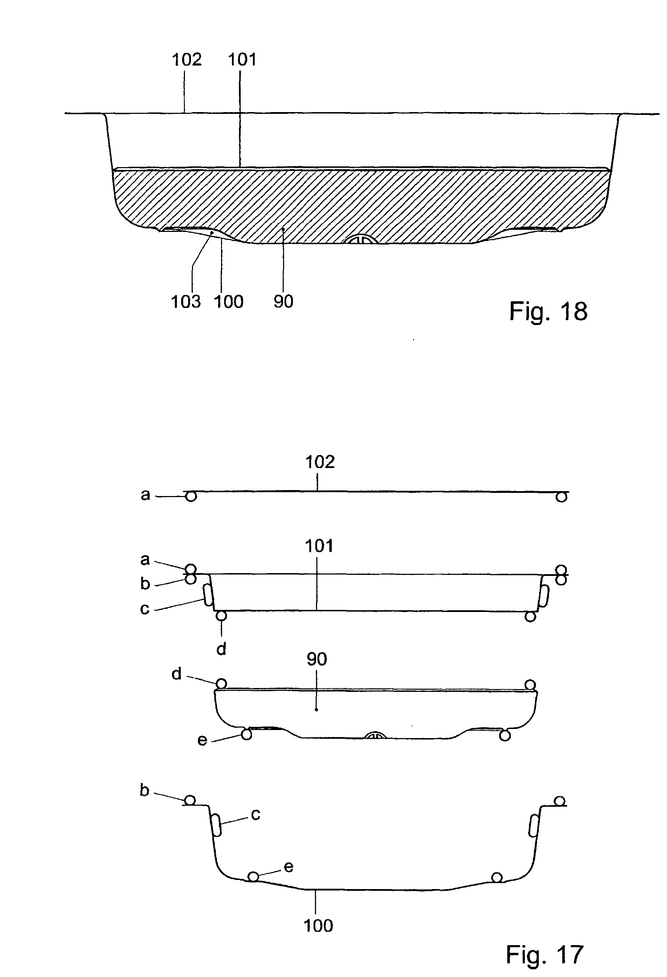

Fig. 17 diagrammatically shows the stiffening body 90 shown in Figs. 15 and 16 together with a bottom sheet 100, a top sheet 101 and a covering sheet 102 for forming an assembled form-retaining pad, as shown in Fig. 18. To clarify the manner in which the assembled pad is obtained from the parts shown in Fig. 17, in Fig. 17, the corresponding sealing places on the different parts are designated by corresponding letters a-a,b-b, c-c, d-d, e-e.

As appears from Fig. 18, the central bulging part of the stiffening body 90 and the bottom sheet 100 stretched tightly over this and fixed to the circumferential wall 91 at e form a circular annular channel 103, via which channel the compartments adjacent to the walls 96 are interconnected. This, as well as the interconnection of the compartments adjacent to the central pen 94, can promote the complete dissolution and discharge of the soluble substance from the stiffening body 90.

In particular, in each of the embodiments discussed above, a smallest dimension of a compartment is smaller than a third, preferably smaller than a quarter, more preferably smaller than a sixth and even more preferably smaller than a seventh of a smallest diameter of the pad. Also, in each of the embodiments discussed above, a smallest dimension of a compartment is smaller than twice the thickness of the pad. Also, in each of the embodiments discussed above, the compartments with the said dimensions extend over at least virtually the whole pad. Preferably, the number of compartments per m² is 3,000-100,000, more preferably 10,000-30,000 per m² and even more preferably 16,000-20,000 per m². The sheet-shaped filter material can also consists of a plate of, for instance, metal or plastic in which small openings are provided. The sheet-shaped material can also consist of a reticular material provided with woven threads between which openings are formed. In addition, the pad can be designed such that it can be opened. This can be done by, for instance, providing the top sheet in a removable manner. The pad can then be opened after use and be filled again with the water-soluble substance. The form-retaining pad can also be used in apparatuses in which the water is not supplied to the form-retaining pad under pressure (pouring water).

Besides a round shape, the pad can also have other shapes such as a rectangular, square or oval shape. In this application, a stiffening body is involved. This is understood to mean that the body is so rigid that the body will hardly, if at all, deform in use.

In each of the embodiments described above, the walls 34 can also enclose angles other than ninety degrees with the surface 12. Also, the normal of each of the walls 14 can vary in vertical direction.

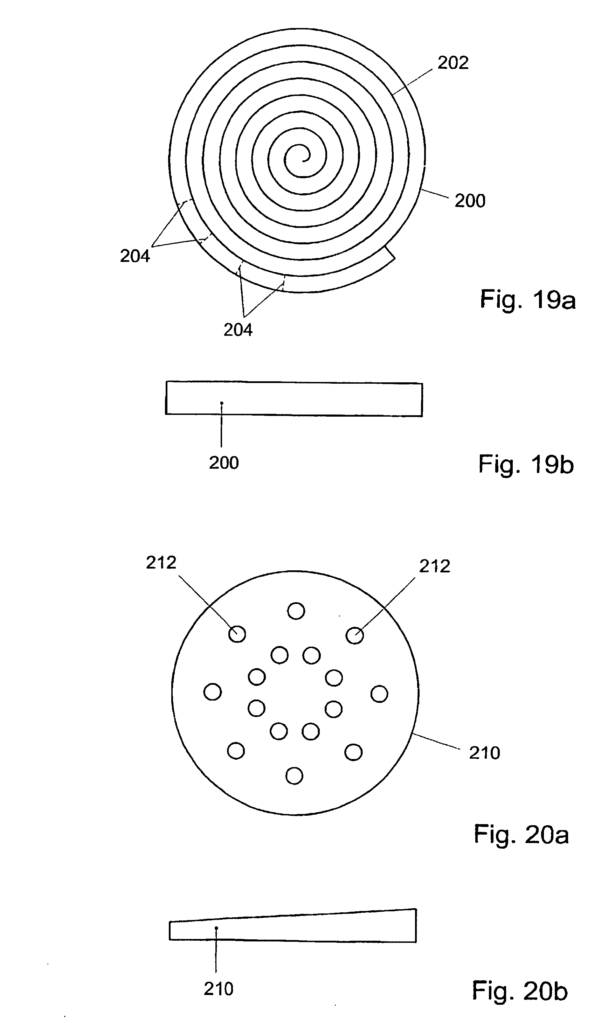

According to a special embodiment, a compartment is provided with more than one opening in its top side and/or bottom side. It is also possible for neighboring compartments to be interconnected, for instance by at least one opening in at least one wall 34 between these neighboring compartments. In this manner, a spiral-shaped stiffening body can also be obtained as will be discussed hereafter with reference to Figs. 19a and 19b. Thus, it is possible for at least a part of the compartmenting wall configuration to be formed by a spiral-shaped wall. An example of such a stiffening body 200 is shown in Figs. 19a and 19b and can, for instance, be used in each of the form-retaining pads according to Figs. 1-10. Additionally, near the spiral 202, a number of side walls 204 can optionally be provided, of which a number are shown in dotted lines in Fig. 19a. However, these side walls can also be omitted.

In this application, a coffee pad is also understood to mean a coffee cartridge known per se.

In particular, further, for instance, the holder 66 and the form-retaining pad 1 as shown in Figs. 10a, 11 can be interconnected before the extraction pad 56 and/or the second covering 39 are placed in the holder. Preferably, the form-retaining pad and the holder have an integrated design. This means that the form-retaining pad is further provided with a holder with a receiving space for including an extraction pad filled with a substance to be extracted such as ground coffee or tea, with the first covering being located below the receiving space and being in fluid communication with the receiving space. The form-retaining pad and holder then form, for instance, a "disposable holder".

In each of the form-retaining pads discussed, for instance with reference to Figs. 1-6, 10-16 and 19, the top sheet of the first covering can be manufactured from a sheet non-transmissive to liquid, which is provided in a removable manner. This can then be removed before water is supplied to the form-retaining pad, when this pad has, for instance, been placed in the holder 66.

In particular, the tearable layer is removed before the form-retaining pad is placed in the holder and the second covering is placed on top of it or under it. The holder according to Figs. 10a and 11 can, in use, also assume other positions when water is supplied to the holder under pressure; for instance, the holder 66 can also stand on its side or upside down. It is also conceivable that other types of holders are used in which the water is, for instance, supplied to a side or bottom side of the holder. Also, the form-retaining pad can further be characterized in that, on the stiffening body, a separating body with a number of passages, more in particular a water distribution plate, such as a shower head plate, has been provided. Such a separating body 210 is shown, for instance, in Figs. 20a and 20b. The passages 212 can vary in number, position and (hydraulic) diameter. In particular, the separating body forms at least a part of the top sheet of the first covering. It is also possible for the separating body to be placed above the top sheet of the first covering 2. It is also possible for the separating body to be placed under the top sheet of the first covering 2. Here, the top sheet can be designed in a removable manner as discussed above and have a design non-transmissive to liquid. Also, the top sheet may be manufactured from a layer of filter material. The separating body may be manufactured from plastic or another material such as metal. Also, the top sheet may be partly (for instance an outer ring) formed from filter paper and partly (for instance an inner disc) from the separating body. It is also possible for the top sheet and the bottom sheet to form one and the same sheet of the first covering. Then, the notion of top sheet and the notion of bottom sheet are not limited to two different sheets which are interconnected. Other sheets or a single sheets can also form a (fictitious) top sheet and bottom sheet of the covering. So, the bottom sheet can also be a part of at least one sheet extending to the top side of the pad. The same applies, completely analogously, to the top sheet; optionally, this can also be partly formed from a sheet extending to the bottom side of the pad. All this also applies to the second covering.

In this example, the substance consists of milk powder/creamer. Other substances such as powder for drinking chocolate and powder for obtaining other flavors and variants are also conceivable. It is also conceivable that the substance has another form than the powder form. The substance may also be provided with a concentrate and/or an extract. Further, the stiffening body and the grid may be manufactured from other materials than synthetic, such as for instance cardboard, metal and/or combinations thereof. Further, the top sheet and the bottom sheet of the first covering may also form a concave or convex surface on their outer side. This concave or convex surface is, for instance, determined by a concave or convex form for the top side 18 and/or bottom side 22 of the grid. In this case, the top sheet 6 and the bottom sheet 8 are also directed substantially parallel to the surface 12. Also, the stiffening body can be provided with a number of grids stacked on top of each other, with, optionally, the compartments of one of the grids being provided such that they are receded in the direction of the surface in relation to the compartments of one of the other grids. Also, in each of the examples of Figs. 7-11 and 18, it is possible for the first covering 2 and the second covering 39 to be mutually exchanged. Here, the stiffening body may also be designed according to the alternatives discussed above. The first covering 2 with the soluble substance will then be located above the second covering 39 with the product to be extracted. In the examples, the compartments 16, for the greater part, have a hexagonal design. Other n-gonal shapes (n ≥ 3) are also possible, as well as round and oval shapes. The center-to-center distance m of neighboring compartments (see Fig. 2) can, for instance, be 6-10 mm and is preferably approximately 7 mm. The diameter of a wall 34 is, for instance, 0.2-0.5 mm and is preferably approximately 0.35 mm. When it is in powder form, the solubility of the soluble substance can be increased by agglomerating the powder. Such variants are also considered to be within the scope of the invention.

## Claims

1. A form-retaining pad (1) for preparing a beverage suitable for consumption, provided with at least a first covering (2), in which a substance (4), such as milk powder/creamer, sugar and similar additives, which is soluble in a liquid, such as water, is included, wherein the covering (2) comprises a top sheet (6), manufactured from a material non-transmissive to the soluble substance (4), such as a layer of filter material, and a bottom sheet (8), manufactured from a material non-transmissive to the soluble substance (4), but transmissive to the substance dissolved in a liquid, such as a layer of filter material, **characterised in that** the pad is further provided with a form-providing stiffening body (10), which is placed between the top sheet (6) and the bottom sheet (8), wherein the top sheet (6) and the bottom sheet (8) extend at least partly substantially parallel to each other and to a surface (12), wherein the stiffening body (10) has a top side adjacent to the top sheet (6) and a bottom side adjacent to the bottom sheet and, by providing a compartmenting wall configuration therein, has a grid structure which is transmissive to liquid from the top side to the bottom side, in which structure at least a part of the soluble substance (4) is accommodated and each compartment formed by the wall configuration is surrounded by that wall configuration, the top sheet (6) and the bottom sheet (8).

2. A form-retaining pad according to claim 1, **characterized in that** at least a part of the compartmenting wall configuration is formed by a grid which forms a plurality of compartments.

3. A form-retaining pad according to claim 1 or 2, **characterized in that** at least a part of the compartmenting wall configuration is formed by a spiral-shaped wall.

4. A form-retaining pad according to any one of the preceding claims, **characterized in that** each compartment formed by the wall configuration, measured perpendicular to a part of the wall configuration, has a width which is smaller than a third, preferably smaller than a quarter, more preferably smaller than a sixth, even more preferably smaller than an eighth of the hydraulic diameter, wherein hydraulic diameter is understood to mean the quotient of four times the passage surface divided by the passage perimeter.

5. A form-retaining pad according to any one of the preceding claims, **characterized in that** each compartment is bounded by a single wall.

6. A form-retaining pad according to any one of the preceding claims, **characterized in that** at least a number of the compartments have an n-gonal design, wherein n is a whole number greater than two.

7. A form-retaining pad according to claims 5 and 6, **characterized in that** a number of the compartments form a honeycomb structure.

8. A form-retaining pad according to any one of claims 1-5, **characterized in that** at least a number of the compartments have a round or oval shape.

9. A form-retaining pad according to any one of the preceding claims, **characterized in that** the stiffening body is provided with an upstanding side wall extending around the wall configuration.

10. A form-retaining pad according to any one of the preceding claims, **characterized in that** the stiffening body is provided with a horizontal edge extending around the wall configuration.

11. A form-retaining pad according to any one of the preceding claims, **characterized in that** the top sheet is fixed to a top side of the stiffening body.

12. A form-retaining pad according to any one of the preceding claims, **characterized in that** the top sheet is fixed to a top side of the wall configuration.

13. A form-retaining pad according to claims 9 and 11, **characterized in that** the top sheet is fixed to a top side of the upstanding side wall.

14. A form-retaining pad according to claim 9, **characterized in that** the top sheet is fixed to an outer side of the upstanding side wall.

15. A form-retaining pad according to claim 13 or 14, **characterized in that** the top sheet is also fixed to a top side of the wall configuration.

16. A form-retaining pad according to claim 15, **characterized in that** the top sheet is fixed to a few points of the top side of the wall configuration.

17. A form-retaining pad according to any one of the preceding claims, **characterized in that** the bottom sheet is fixed to a bottom side of the stiffening body.

18. A form-retaining pad according to any one of the preceding claims, **characterized in that** the bottom sheet is fixed to a bottom side of the wall configuration.

19. A form-retaining pad according to claims 9 and 17, **characterized in that** the bottom sheet is fixed to a bottom side of the upstanding side wall.

20. A form-retaining pad according to claim 9, **characterized in that** the bottom sheet is fixed to an outer side of the upstanding side wall.

21. A form-retaining pad according to claim 19 or 20, **characterized in that** the bottom sheet is also fixed to a bottom side of the wall configuration.

22. A form-retaining pad according to claim 21, **characterized in that** the bottom sheet is fixed to a few points of the bottom side of the wall configuration.

23. A form-retaining pad according to any one of the preceding claims, **characterized in that** the bottom sheet and the top sheet are interconnected and are preferably interconnected at their longitudinal edges and are more preferably directly interconnected, wherein the interconnected parts form a joint.

24. A form-retaining pad according to any one of the preceding claims, **characterized in that** the pad has a flat shape, wherein the pad has larger dimensions in the direction of the surface than in a direction perpendicular to the surface.

25. A form-retaining pad according to any one of the preceding claims, **characterized in that** the stiffening body is manufactured from a synthetic such as a plastic, metal, cardboard, rubber and/or biodegradable material.

26. A form-retaining pad according to any one of the preceding claims, **characterized in that** the form-retaining pad has a disc-shaped design.

27. A form-retaining pad according to any one of the preceding claims, **characterized in that** the top sheet and/or the bottom sheet of the first covering are/is manufactured from filter paper.

28. A form-retaining pad according any one of claims 1-27, **characterized in that** the top sheet of the first covering is manufactured at least partly from a sheet non-transmissive to liquid, which has been provided in a removable manner or is manufactured at least partly from a filter material which is transmissive to liquid such as water or a coffee extract.

29. A form-retaining pad according to any one of the preceding claims, **characterized in that** the stiffening body comprises a plurality of relatively small compartments located at a relatively short distance from a circumferential edge of the stiffening body and that the stiffening body comprises a plurality of relatively large compartments located at a relatively long distance from the circumferential edge.

30. A form-retaining pad according to any one of the preceding claims, **characterized in that** the stiffening body comprises, at least also, a plurality of elongated compartments directed at least substantially parallel to each other.

31. A form-retaining pad according to any one of the preceding claims, **characterized in that**, between the wall configuration and the bottom sheet, the form-retaining pad is provided with at least one receiving space which is at least partly filled with the soluble substance.

32. A form-retaining pad according to any one of the preceding claims, **characterized in that** a top side of the stiffening body is formed according to a convex or concave surface.

33. A form-retaining pad according to any one of the preceding claims, **characterized in that** a bottom side of the stiffening body is formed according to a convex or concave surface.

34. A form-retaining pad according to any one of the preceding claims, **characterized in that** a smallest dimension of a compartment is smaller than a third, preferably smaller than a quarter, more preferably smaller than a sixth and even more preferably smaller than a seventh of a smallest diameter of the pad.

35. A form-retaining pad according to any one of the preceding claims, **characterized in that** a smallest dimension of a compartment is smaller than twice the thickness of the pad.

36. A form-retaining pad according to any one of claims 34 or 35, **characterized in that** the compartments with the said dimensions extend over at least virtually the whole pad.

37. A form-retaining pad according to any one of the preceding claims, **characterized in that** the pad is provided with at least two stiffening bodies positioned above each other.

38. A form-retaining pad according to claim 37, **characterized in that** the stiffening bodies are provided such that they are offset in relation to each other.

39. A form-retaining pad according to any one of the preceding claims, **characterized in that** the pad is further provided with a second covering manufactured at least partly from sheet-shaped filter material, in which a product to be extracted such as ground coffee is included, wherein the second covering extends above or under the first covering substantially parallel to the surface.

40. A form-retaining pad according to claim 39, **characterized in that** the second covering is provided with a top sheet manufactured from sheet-shaped filter material and a bottom sheet manufactured from sheet-shaped filter material, wherein the top sheet and the bottom sheet are interconnected and are preferably interconnected at their longitudinal edges and are more preferably directly interconnected, wherein the interconnected parts form a circular joint.

41. A form-retaining pad according to claim 40, **characterized in that** the bottom sheet of the second covering is connected to the first covering.

42. A form-retaining pad according to claim 40 or 41, **characterized in that** the bottom sheet of the second covering is formed by the top sheet of the first covering.

43. A form-retaining pad according to any one of the preceding claims 39-42, **characterized in that** the top sheet and/or bottom sheet of the second covering are/is manufactured from filter paper.

44. A form-retaining pad according to any one of claims 1-38, **characterized in that** the form-retaining pad is further provided with a holder with a receiving space for including an extraction pad filled with a substance to be extracted such as ground coffee or tea, wherein the first covering is located below the receiving space and is in fluid communication with the receiving space.

45. A form-retaining pad according to any one of the preceding claims, **characterized in that** at least the bottom side of the stiffening body is provided with a bulging part.

46. A form-retaining pad according to claim 45, **characterized in that** the bulging part is determined by an increase of the height of a part of the compartmenting wall configuration.

47. A form-retaining pad according to claim 45 or 46, **characterized in that** the bulging part has a surface extending parallel to the above-mentioned surface.

48. A form-retaining pad according to claim 47, **characterized in that** the surface forms a central part of the compartmenting wall configuration.

49. A form-retaining pad according to claim 48, **characterized in that** the central part is arranged in such a receded manner in relation to a bottom edge of a circumferential wall of the stiffening body that the bottom side of the compartmenting wall configuration recedes between the edge of the central surface and the bottom edge of the circumferential wall in relation to a line drawn between that edge of the central surface and that bottom edge of the circumferential wall.

50. A form-retaining pad according to claim 49, **characterized in that** the bottom sheet extends over the central surface and from the edge thereof to the bottom edge of the circumferential wall, which edge preferably projects in an annular manner, and is fixed on or near this on the stiffening body.

51. A form-retaining pad according to claim 50, **characterized in that** the bottom sheet further extends from a fixation on the bottom edge of the circumferential wall along the circumferential wall to at least near an outer circumferential edge of the top sheet and is fixed thereon on or near a fixation of the top sheet on the stiffening body.

52. A form-retaining pad according to claim 50, **characterized in that** the bottom sheet further extends from a fixation on the bottom edge of the circumferential wall along the circumferential wall and is connected to the top sheet to form a covering completely enclosing the stiffening body.

53. A form-retaining pad according to claim 51 or 52, **characterized in that** the top sheet and/or the bottom sheet are further elongated and are/is connected there to a further sheet for forming an enclosed receiving space, in which the product to be extracted, such as ground coffee, is included.

54. A form-retaining pad according to any one of the preceding claims, **characterized in that**, on the stiffening body, a separating body with a number of passages, more in particular a water distribution plate, such as a shower hear plate, is provided.

55. A form-retaining pad according to claim 54, **characterized in that** the separating body forms at least a part of the top sheet of the first covering.

56. A form-retaining pad according to claim 54, **characterized in that** the separating body is placed above the top sheet of the first covering.

57. A form-retaining pad according to claim 54, **characterized in that** the separating body is placed under the top sheet of the first covering.

58. A form-retaining pad according to claim 56 or 57, **characterized in that** the top sheet consists of a layer of filter material.

59. A form-retaining pad according to claim 57, **characterized in that** the top sheet consists of a layer of filter material non-transmissive to liquid, which is provided in a removable manner.

60. An assembly of a form-retaining pad according to any one of the preceding claims 1-59 and an extraction pad manufactured at least partly from sheet-shaped filter material which is filled with a product to be extracted such as ground coffee.

61. An assembly according to claim 60, **characterized in that** a size of the extraction pad in a width direction of the extraction pad at least corresponds to a size of the form-retaining pad in a direction of the said surface of the form-retaining pad.

62. An assembly according to claim 61, **characterized in that** a size of the extraction pad in a width direction of the extraction pad is larger than a size of the form-retaining pad in a direction of the said surface of the form-retaining pad.

63. An assembly of a form-retaining pad according to claim 61 or 62, **characterized in that** the form-retaining pad and the extraction pad each have the shape of a round disc, wherein the extraction pad has a diameter which is at least as large as a diameter of a form-retaining pad.

64. An assembly according to claim 63, **characterized in that** the diameter of the extraction pad is larger than the diameter of the form-retaining pad.

65. An assembly according to any one of claims 60-64, **characterized in that** the sheet-shaped filter material of the extraction pad is provided with filter paper.

66. A method for preparing a beverage suitable for consumption using a form-retaining pad or an assembly according to any one of the preceding claims, wherein an amount of substance, such as milk powder/creamer, sugar and similar additives, soluble in a liquid, such as water, accommodated in the form-retaining pad comprising a grid structure transmissive to liquid formed by a compartmenting wall configuration in a stiffening body covered in a closing manner by a top sheet and a bottom sheet, as well as an amount of substance to be extracted, such as ground coffee, accommodated in a covering, are placed in a holder, then a liquid, such as hot water is supplied to the holder, in particular from a top side thereof and preferably under pressure, to the two substances, after which the beverage obtained in this manner is tapped via at least one outlet opening in a bottom side of the holder.

67. A method according to claim 66, **characterized in that** the liquid is first supplied to the substance to be extracted and then to the soluble substance.

68. A method according to claim 66, **characterized in that** the liquid is first supplied to the soluble substance and then to the substance to be extracted.

69. A method according to claim 66, 67 or 68, **characterized in that** the form-retaining pad and the covering are combined to form a whole before being placed in the holder.

70. A method according to claim 69, **characterized in that** the combining is done in such a manner that the separation between the form-retaining pad and the covering is formed by one single filter layer.

71. A method according to any one of claims 66-70, **characterized in that** the form-retaining pad is provided with a tearable layer, which is removed before supplying liquid to the holder.

72. A method according to claim 71, **characterized in that** the tearable layer is removed before placing the form-retaining pad in the holder and placing the covering thereon or that the covering is placed in the holder and the form-retaining pad is placed thereon, wherein the tearable layer is removed before or after the form-retaining pad is placed in the holder.

73. A method according to claim 71 or 72, **characterized in that** a used form-retaining pad from which the layer has been torn off is provided with a stiffening body designed such that this can at least partly be filled with a soluble substance for the purpose of reuse.

74. A method according to any one of the preceding claims 66-73, **characterized in that** the beverage obtained is discharged through an outlet opening designed as a spout opening in such a manner that a small-bubbled foam layer is obtained.

75. A method according to any one of the preceding claims 66-74, **characterized in that** the form-retaining pad and the holder are interconnected before the covering is included in the holder.

76. A method according to claim 75, **characterized in that** the form-retaining pad and the holder have an integrated design.

## Patentansprüche

1. Ein formstabiles Pad (1) für die Zubereitung eines für den Verzehr geeigneten Getränks, das mit mindestens einer ersten Hülle (2) versehen ist, in welche ein Substanz (4), wie etwa Milchpulver / Aufschäumer, Zucker und ähnliche Zusätze, welche in einer Flüssigkeit, wie etwa Wasser, löslich ist, eingeschlossen ist, wobei die Hülle (2) ein oberes Blatt (6) umfasst, das aus einem Material hergestellt ist, welches für die lösliche Substanz (4) nicht durchlässig ist, wie etwa einer Schicht aus Filtermaterial, und ein unteres Blatt umfasst, das aus einem Material hergestellt ist, welches für die lösliche Substanz (4) nicht durchlässig ist, jedoch für die in einer Flüssigkeit gelöste Substanz durchlässig ist, wie etwa einer Schicht aus Filtermaterial, welches **dadurch gekennzeichnet ist, dass** das Pad des Weiteren mit einem formgebenden, versteifenden Körper (10) versehen ist, welcher zwischen dem obere Blatt (6) und dem unteren Blatt (8) platziert ist, wobei das obere Blatt (6) und das untere Blatt (8) wenigstens teilweise im Wesentlichen parallel zueinander und zu einer Oberfläche (11) liegen, wobei der versteifende Körper (10) eine Oberseite hat, die an das obere Blatt (6) angrenzt und eine Unterseite (8) hat, die an das untere Blatt angrenzt, und welcher durch die Bereitstellung einer unterteilenden Wandanordnung in seinem Inneren eine Gitterstruktur besitzt, die durchlässig für Flüssigkeiten von der Oberseite zur Unterseite ist, wobei sich in dieser Struktur zumindest ein Teil der löslichen Substanz (4) befindet, und jedes von der Wandanordnung gebildete Kompartiment von dieser Wandanordnung, dem oberen Blatt (6) und dem unteren Blatt (8) umgeben ist.

2. Ein formstabiles Pad gemäß Anspruch 1, welches **dadurch gekennzeichnet ist, dass** wenigstens ein Teil der unterteilenden Wandanordnung von einem Gitter, das eine Vielzahl von Kompartimenten bildet, gebildet wird.

3. Ein formstabiles Pad gemäß Anspruch 1 oder 2, welches **dadurch gekennzeichnet ist, dass** wenigstens ein Teil der unterteilenden Wandanordnung von einer spiralförmigen Wand gebildet wird.

4. Ein formstabiles Pad gemäß irgendeinem der vorausgehenden Ansprüche, welches **dadurch gekennzeichnet ist, dass** jedes von der Wandanordnung gebildete Kompartiment eine Breite hat, die senkrecht zu einem Teil der Wandanordnung gemessen, kleiner als ein Drittel, bevorzugt kleiner als ein Viertel, bevorzugter kleiner als ein Sechstel, und sogar noch bevorzugter kleiner als ein Achtel des hydraulischen Durchmessers ist, wobei mit dem hydraulischen Durchmesser der Quotient gemeint ist, der erhalten wird, wenn die Oberfläche des Durchlasses vier mal durch den Umfang des Durchlasses geteilt wird.

5. Ein formstabiles Pad gemäß irgendeinem der vorausgehenden Ansprüche, welches **dadurch gekennzeichnet ist, dass** jedes Kompartiment von einer einzelnen Wand begrenzt wird.

6. Ein formstabiles Pad gemäß irgendeinem der vorausgehenden Ansprüche, welches **dadurch gekennzeichnet ist, dass** wenigstens eine Anzahl der Kompartimente eine n-gonale Gestalt hat, wobei n eine Zahl größer als zwei ist.

7. Ein formstabiles Pad gemäß der Ansprüche 5 und 6, welches **dadurch gekennzeichnet ist, dass** eine Anzahl der Kompartimente eine Wabenstruktur bildet.

8. Ein formstabiles Pad gemäß irgendeinem der vorausgehenden Ansprüche 1-5, welches **dadurch gekennzeichnet ist, dass** wenigstens eine Anzahl der Kompartimente eine runde oder ovale Form hat.

9. Ein formstabiles Pad gemäß irgendeinem der vorausgehenden Ansprüche, welches **dadurch gekennzeichnet ist, dass** der versteifende Körper mit einer aufrechten Wand versehen ist, welche um die Wandanordnung herum verläuft.

10. Ein formstabiles Pad gemäß irgendeinem der vorausgehenden Ansprüche, welches **dadurch gekennzeichnet ist, dass** der versteifende Körper mit einem horizontalen Rand versehen ist, welcher um die Wandanordnung herum verläuft.

11. Ein formstabiles Pad gemäß irgendeinem der vorausgehenden Ansprüche, welches **dadurch gekennzeichnet ist, dass** das obere Blatt an einer Oberseite des versteifenden Körpers befestigt ist.

12. Ein formstabiles Pad gemäß irgendeinem der vorausgehenden Ansprüche, welches **dadurch gekennzeichnet ist, dass** das obere Blatt an einer Oberseite der Wandanordnung befestigt ist.

13. Ein formstabiles Pad gemäß der Ansprüche 9 und 11, welches **dadurch gekennzeichnet ist, dass** das obere Blatt an einer Oberseite der aufrechten Seitenwand befestigt ist.

14. Ein formstabiles Pad gemäß Anspruch 9, welches **dadurch gekennzeichnet ist, dass** das obere Blatt an einer Außenseite der aufrechten Wand befestigt ist.

15. Ein formstabiles Pad gemäß Anspruch 13 oder 14, welches **dadurch gekennzeichnet ist, dass** das obere Blatt auch an einer Oberseite der Wandanordnung befestigt ist.

16. Ein formstabiles Pad gemäß Anspruch 15 welches **dadurch gekennzeichnet ist, dass** das obere Blatt an ein paar Punkten der Oberseite der Wandanordnung befestigt ist.

17. Ein formstabiles Pad gemäß irgendeinem der vorausgehenden Ansprüche, welches **dadurch gekennzeichnet ist, dass** das untere Blatt an einer Unterseite des versteifenden Körpers befestigt ist.

18. Ein formstabiles Pad gemäß irgendeinem der vorausgehenden Ansprüche, welches **dadurch gekennzeichnet ist, dass** das untere Blatt an einer Unterseite der Wandanordnung befestigt ist.

19. Ein formstabiles Pad gemäß der Ansprüche 9 und 17, welches **dadurch gekennzeichnet ist, dass** das untere Blatt an einer Unterseite der aufrechten Seitenwand befestigt ist.

20. Ein formstabiles Pad gemäß Anspruch 9, welches **dadurch gekennzeichnet ist, dass** das untere Blatt an einer Außenseite der aufrechten Seitenwand befestigt ist.

21. Ein formstabiles Pad gemäß Anspruch 19 oder 20, welches **dadurch gekennzeichnet ist, dass** das untere Blatt auch an einer Unterseite der Wandanordnung befestigt ist.

22. Ein formstabiles Pad gemäß Anspruch 21, welches **dadurch gekennzeichnet ist, dass** das untere Blatt an ein paar Punkten der Unterseite der Wandanordnung befestigt ist.

23. Ein formstabiles Pad gemäß irgendeinem der vorausgehenden Ansprüche, welches **dadurch gekennzeichnet ist, dass** das untere Blatt und das obere Blatt miteinander verbunden sind, und bevorzugt an ihren Längsrändern miteinander verbunden sind, und bevorzugter direkt miteinander verbunden sind, wobei die verbundenen Teile eine Verbindung bilden.

24. Ein formstabiles Pad gemäß irgendeinem der vorausgehenden Ansprüche, welches **dadurch gekennzeichnet ist, dass** das Pad eine flache Form hat, wobei die Abmessungen des Pads in der Richtung der Oberfläche größer als in einer Richtung, die senkrecht zur Oberfläche liegt, sind.

25. Ein formstabiles Pad gemäß irgendeinem der vorausgehenden Ansprüche, welches **dadurch gekennzeichnet ist, dass** der versteifende Körper aus einem synthetischen Material, wie etwa einem Kunststoff, Metall, Pappe und/oder biologisch abbaubarem Material, hergestellt ist.

26. Ein formstabiles Pad gemäß irgendeinem der vorausgehenden Ansprüche, welches **dadurch gekennzeichnet ist, dass** das formstabile Pad eine scheibenförmige Gestalt hat.

27. Ein formstabiles Pad gemäß irgendeinem der vorausgehenden Ansprüche, welches **dadurch gekennzeichnet ist, dass** das obere Blatt und/oder das untere Blatt der ersten Hülle aus Filterpapier hergestellt sind/ist.

28. Ein formstabiles Pad gemäß irgendeinem der Ansprüche 1-27, welches **dadurch gekennzeichnet ist, dass** das obere Blatt der ersten Hülle wenigstens teilweise aus einem Blatt hergestellt ist, welches nicht durchlässig für Flüssigkeiten ist, und welches entnommen werden kann oder wenigstens teilweise aus einem Filtermaterial hergestellt ist, welches für eine Flüssigkeit, wie etwa Wasser oder einem Kaffeeextrakt, durchlässig ist.

29. Ein formstabiles Pad gemäß irgendeinem der vorausgehenden Ansprüche, welches **dadurch gekennzeichnet ist, dass** der versteifende Körper eine Vielzahl relativ kleiner Kompartimente umfasst, welche sich in einem relativ geringen Abstand zu einem ringsum verlaufenden Rand des versteifenden Körpers befinden, und dass der versteifende Körper eine Vielzahl relativ großer Kompartimente umfasst, welche sich in einem relativ großen Abstand zu dem ringsum verlaufenden Rand befinden.

30. Ein formstabiles Pad gemäß irgendeinem der vorausgehenden Ansprüche, welches **dadurch gekennzeichnet ist, dass** der versteifende Körper auch mindestens ein Vielzahl gestreckter Kompartimente umfasst, welche zumindest im Wesentlichen parallel zueinander ausgerichtet sind.

31. Ein formstabiles Pad gemäß irgendeinem der vorausgehenden Ansprüche, welches **dadurch gekennzeichnet ist, dass** zwischen der Wandanordnung und dem unteren Blatt das formstabile Pad, mit mindestens einem Aufnahmeplatz, der wenigstens zum Teil mit der löslichen Substanz gefüllt ist, bereit gestellt wird.

32. Ein formstabiles Pad gemäß irgendeinem der vorausgehenden Ansprüche, welches **dadurch gekennzeichnet ist, dass** eine Oberseite des versteifenden Körpers entsprechend einer konvexen oder konkaven Oberfläche geformt ist.

33. Ein formstabiles Pad gemäß irgendeinem der vorausgehenden Ansprüche, welches **dadurch gekennzeichnet ist, dass** eine Unterseite des versteifenden Körpers entsprechend einer konvexen oder konkaven Oberfläche geformt ist.

34. Ein formstabiles Pad gemäß irgendeinem der vorausgehenden Ansprüche, welches **dadurch gekennzeichnet ist, dass** eine kleinste Abmessung eines Kompartiments noch kleiner als ein Drittel, bevorzugt kleiner als ein Viertel, bevorzugter kleiner als Sechstel und sogar noch bevorzugter kleiner als ein Siebtel des kleinsten Durchmessers des Pads ist.

35. Ein formstabiles Pad gemäß irgendeinem der vorausgehenden Ansprüche, welches **dadurch gekennzeichnet ist, dass** eine kleinste Abmessung eines Kompartiments kleiner als die zweifache Dicke des Pads ist.

36. Ein formstabiles Pad gemäß irgendeinem der Ansprüche 34 oder 35, welches **dadurch gekennzeichnet ist, dass** die Kompartimente mit den besagten Abmessungen sich tatsächlich zumindest über das gesamte Pad erstrecken.

37. Ein formstabiles Pad gemäß irgendeinem der vorausgehenden Ansprüche, welches **dadurch gekennzeichnet ist, dass** das Pad mit mindestens zwei versteifenden Körpern versehen ist, welche sich übereinander befinden.

38. Ein formstabiles Pad gemäß Anspruch 37, welches **dadurch gekennzeichnet ist, dass** die versteifenden Körper so bereit gestellt sind, dass sie in Relation zueinander versetzt vorliegen.

39. Ein formstabiles Pad gemäß irgendeinem der vorausgehenden Ansprüche, welches **dadurch gekennzeichnet ist, dass** das Pad des Weiteren mit einer zweiten Hülle versehen ist, welche wenigstens zum Teil aus blattförmigem Filtermaterial hergestellt ist, in welcher ein zu extrahierendes Produkt, wie etwa Kaffeepulver, eingeschlossen ist, wobei sich die zweite Hülle oberhalb oder unterhalb der ersten Hülle im Wesentlichen parallel zur Oberfläche erstreckt.

40. Ein formstabiles Pad gemäß Anspruch 39, welches **dadurch gekennzeichnet ist, dass** die zweite Hülle mit einem oberen Blatt, das aus blattförmigem Filtermaterial hergestellt ist, und einem unteren Blatt, das aus blattförmigem Filtermaterial hergestellt ist, versehen ist, wobei das obere Blatt und das untere Blatt miteinander verbunden sind, und bevorzugt an ihren Längsrändern miteinander verbunden sind, und noch bevorzugter direkt miteinander verbunden sind, wobei die miteinander verbundenen Teile ein kreisförmige Verbindung bilden.

41. Ein formstabiles Pad gemäß Anspruch 40, welches **dadurch gekennzeichnet ist**, das das untere Blatt der zweiten Hülle mit der ersten Hülle verbunden ist.

42. Ein formstabiles Pad gemäß Anspruch 40 oder 41, welches **dadurch gekennzeichnet ist, dass** das untere Blatt der zweiten Hülle vom oberen Blatt der ersten Hülle gebildet wird.

43. Ein formstabiles Pad gemäß irgendeinem der vorausgehenden Ansprüche 39-42, welches **dadurch gekennzeichnet ist, dass** das obere Blatt und/oder das untere Blatt der zweiten Hülle aus Filterpapier hergestellt sind/ist.

44. Ein formstabiles Pad gemäß irgendeinem der vorausgehenden Ansprüche 1-38, welches **dadurch gekennzeichnet ist, dass** das formstabile Pad des Weiteren mit einem Halter versehen ist, welcher einen Aufnahmeplatz für das Enthalten eines Extraktionspads, das mit einer zu extrahierenden Substanz, wie etwa Kaffeepulver oder Tee, gefüllt ist, besitzt, worin sich die erste Hülle unter dem Aufnahmeplatz befindet und in Flüssigkeitsverbindung mit dem Aufnahmeplatz steht.

45. Ein formstabiles Pad gemäß irgendeinem der vorausgehenden Ansprüche, welches **dadurch gekennzeichnet ist, dass** wenigstens die Unterseite des versteifenden Körpers mit einem verdickten Teil versehen ist.

46. Ein formstabiles Pad gemäß Anspruch 45, welches **dadurch gekennzeichnet ist, dass** der verdickte Teil durch eine Zunahme der Höhe eines Teils der unterteilenden Wandanordnung vorgegeben wird.

47. Ein formstabiles Pad gemäß Anspruch 45 oder 46, welches **dadurch gekennzeichnet ist, dass** der verdickte Teil eine Oberfläche aufweist, die parallel zu der oben erwähnten Oberfläche verläuft.

48. Ein formstabiles Pad gemäß Anspruch 47, welches **dadurch gekennzeichnet ist, dass** die Oberfläche einen zentralen Teil der unterteilenden Wandanordnung bildet.

49. Ein formstabiles Pad gemäß Anspruch 48, welches **dadurch gekennzeichnet ist, dass** der zentrale Teil in Relation zu einem unteren Rand einer ringsum verlaufenden Wand des versteifenden Körpers zurückgezogen angeordnet ist, so dass die Unterseite der unterteilenden Wandanordnung sich zwischen dem Rand der zentralen Oberfläche und dem unteren Rand der ringsum verlaufenden Wand in Relation zu einer Linie, die zwischen diesem Rand der zentralen Oberfläche und diesem unteren Rand der ringsum verlaufenden Wand verläuft, zurück zieht.

50. Ein formstabiles Pad gemäß Anspruch 49, welches **dadurch gekennzeichnet ist, dass** das untere Blatt sich über die zentrale Oberfläche, sowie von ihrem Rand bis zum unteren Rand der ringsum verlaufenden Wand, deren Rand vorzugsweise ringförmig vorsteht, erstreckt, und auf dem versteifenden Körper oder in dessen Nähe befestigt ist.

51. Ein formstabiles Pad gemäß Anspruch 50, welches **dadurch gekennzeichnet ist, dass** das untere Blatt sich des Weiteren von einer Befestigung auf dem unteren Rand der ringsum verlaufenden Wand, entlang der ringsum verlaufenden Wand, bis wenigstens in die Nähe eines äußeren ringsum verlaufenden Randes des oberen Blattes erstreckt, und daran oder in der Nähe einer Befestigung des oberen Blattes auf dem versteifenden Körper befestigt ist.

52. Ein formstabiles Pad gemäß Anspruch 50, welches **dadurch gekennzeichnet ist, dass** das untere Blatt sich des Weiteren von einer Befestigung auf dem unteren Rand der ringsum verlaufenden Wand aus, entlang der ringsum verlaufenden Wand, erstreckt, und an dem oberen Blatt befestigt ist, um so eine Hülle zu formen, die den versteifenden Körper vollständig einschließt.

53. Ein formstabiles Pad gemäß Anspruch 51 oder 52, welches **dadurch gekennzeichnet ist, dass** das obere Blatt und/oder das untere Blatt des Weiteren verlängert sind/ist und dort mit einem weiteren Blatt verbunden sind/ist, um einen eingeschlossenen Aufnahmeplatz zu bilden, in welchem das zu extrahierende Produkt, wie etwa Kaffeepulver, enthalten ist.

54. Ein formstabiles Pad gemäß irgend einem der vorausgehenden Ansprüche, welches **dadurch gekennzeichnet ist, dass** auf dem versteifenden Körper ein Trennkörper mit einer Anzahl von Durchlässen, insbesondere mit einer Wasserverteilungs-Platte, wie etwa einer Duschkopf-Platte, bereit gestellt wird.

55. Ein formstabiles Pad gemäß Anspruch 54, welches **dadurch gekennzeichnet ist, dass** der Trennkörper wenigstens einen Teil des oberen Blattes der ersten Hülle bildet.

56. Ein formstabiles Pad gemäß Anspruch 54, welches **dadurch gekennzeichnet ist, dass** der Trennkörper auf dem oberen Blatt der ersten Hülle platziert ist.

57. Ein formstabiles Pad gemäß Anspruch 54, welches **dadurch gekennzeichnet ist, dass** der Trennkörper unter dem oberen Blatt der ersten Hülle platziert ist.

58. Ein formstabiles Pad gemäß Anspruch 56 oder 57, welches **dadurch gekennzeichnet ist, dass** das obere Blatt aus einer Lage Filtermaterial besteht.

59. Ein formstabiles Pad gemäß Anspruch 57, welches **dadurch gekennzeichnet ist, dass** das obere Blatt aus einer Lage Filtermaterial, das nicht durchlässig für Flüssigkeiten ist, besteht und entnommen werden kann.

60. Eine Anordnung eines formstabilen Pads gemäß irgendeinem der vorausgehenden Ansprüche 1-59 und eines Extraktionspads, das wenigstens zum Teil aus blattförmigem Filtermaterial hergestellt ist und mit einem zu extrahierenden Produkt, wie etwa Kaffeepulver, gefüllt ist.

61. Eine Anordnung gemäß Anspruch 60, welche **dadurch gekennzeichnet ist, dass** eine Größe des Extraktionspads in einer Breitenausrichtung des Extraktionspads mindestens einer Größe des formstabilen Pads in einer Richtung der besagten Oberfläche des formstabilen Pads entspricht.

62. Eine Anordnung gemäß Anspruch 61, welche **dadurch gekennzeichnet ist, dass** eine Größe des Extraktionspads in einer Breitenausrichtung des Extraktionspads größer als eine Größe des formstabilen Pads in einer Richtung der besagten Oberfläche des formstabilen Pads ist.

63. Eine Anordnung eines formstabilen Pads gemäß Anspruch 61 oder 62, welche **dadurch gekennzeichnet ist, dass** das formstabile Pad und das Extraktionspad beide die Form einer runden Scheibe haben, wobei ein Durchmesser des Extraktionspads mindestens so groß wie ein Durchmesser des formstabilen Pads ist.

64. Eine Anordnung gemäß Anspruch 63, welche **dadurch gekennzeichnet ist, dass** der Durchmesser des Extraktionspads größer als der Durchmesser des formstabilen Pads ist.

65. Ein Zusammenbau gemäß irgendeinem der vorausgehenden Ansprüche 60-64, welche **dadurch gekennzeichnet ist, dass** das blattförmige Filtermaterial des Extraktionspads mit Filterpapier versehen ist.

66. Ein Verfahren für die Zubereitung eines für den Verzehr geeigneten Getränks, welches ein formstabiles Pad oder eine Anordnung gemäß irgendeinem der vorausgehenden Ansprüche verwendet, wobei eine Menge einer Substanz, wie etwa Milchpulver/Aufschäumer, Zucker und ähnlicher Zusätze, die in einer Flüssigkeit, wie etwa Wasser, löslich ist, in einem formstabilen Pad aufgenommen ist, das eine Gitterstruktur, die durchlässig für Flüssigkeiten ist, hat und von einer unterteilenden Wandanordnung in einem versteifenden Körper gebildet wird, welcher von einem oberen Blatt und einem unteren Blatt so eingehüllt wird, dass er verschlossen wird, genauso wie eine Menge zu extrahierender Substanz, wie etwa Kaffeepulver, die sich in einer Hülle befindet, in einen Halter eingelegt werden, dann wird eine Flüssigkeit, wie etwa heißes Wasser, insbesondere von dessen Oberseite her, bevorzugt unter Druck, zu den zwei Substanzen gegeben, wonach dann das auf diese Weise erhaltene Getränk über mindestens eine Auslassöffnung, in einer Unterseite des Halters, abgezapft wird.

67. Ein Verfahren gemäß Anspruch 66, welches **dadurch gekennzeichnet ist, dass** die Flüssigkeit als Erstes zu der zu extrahierenden Substanz und dann zu der löslichen Substanz zugeführt wird.

68. Ein Verfahren gemäß Anspruch 66, welches **dadurch gekennzeichnet ist, dass** die Flüssigkeit als Erstes zu der löslichen Substanz und dann zu der zu extrahierenden Substanz zugeführt wird.

69. Ein Verfahren gemäß Anspruch 66, 67 oder 68, welches **dadurch gekennzeichnet ist, dass** das formstabile Pad und die Hülle vereint werden, um ein Ganzes zu bilden, bevor sie in den Halter eingelegt werden.

70. Ein Verfahren gemäß Anspruch 69, welches **dadurch gekennzeichnet ist, dass** die Vereinigung **dadurch** erreicht wird, dass die Trennung zwischen dem formstabilen Pad und der Hülle nur aus einer einzigen Filterschicht gebildet wird.

71. Ein Verfahren gemäß irgendeinem der Ansprüche 66-70, welches **dadurch gekennzeichnet ist, dass** das formstabile Pad mit einer abreißbaren Schicht, die entfernt wird, bevor Flüssigkeit in den Halter gegeben wird, versehen wird.

72. Ein Verfahren gemäß Anspruch 71, welches **dadurch gekennzeichnet ist, dass** die abreißbare Schicht entfernt wird, bevor das formstabile Pad in den Halter eingelegt wird und die Hülle darauf platziert wird, oder dass die Hülle in den Halter eingelegt wird, und das formstabile Pad darauf platziert wird, wobei die abreißbare Schicht entfernt wird, bevor oder nachdem das formstabile Pad in den Halter eingelegt wird.

73. Ein Verfahren gemäß Anspruch 71 oder 72, welches **dadurch gekennzeichnet ist, dass** ein benutztes, formstabiles Pad, von dem die Schicht abgerissen worden ist, mit einem versteifenden Körper, der so gestaltet ist, dass dieser zum Zweck der Wiederverwendung, zumindest zum Teil mit einer löslichen Substanz gefüllt werden kann, versehen ist.

74. Ein Verfahren gemäß einem der vorausgehenden Ansprüche 66-73, welches **dadurch gekennzeichnet ist, dass** das erhaltene Getränk durch eine Auslassöffnung, die als Ausspritzöffnung gestaltet ist, auf eine Art und Weise abgegeben wird, dass eine feinblasige Schaumschicht erhalten wird.

75. Ein Verfahren gemäß einem der vorausgehenden Ansprüche 66-74, welches **dadurch gekennzeichnet ist, dass** das formstabile Pad und der Halter miteinander verbunden werden, bevor die Hülle in den Halter eingeschlossen wird.

76. Ein Verfahren gemäß Anspruch 75, welches **dadurch gekennzeichnet ist, dass** das formstabile Pad und der Halter eine Einheit darstellen.

## Revendications

1. Cartouche rigide (1) pour la préparation d'une boisson propre à la consommation, dotée d'au moins une première couverture (2), dans laquelle est incluse une substance (4), telle que de la poudre/crème de lait, du sucre et des additifs similaires, qui est soluble dans un liquide, tel que l'eau, dans laquelle la couverture (2) comprend une feuille supérieure (6) fabriquée à partir d'un matériau ne laissant pas passer la substance soluble (4), telle qu'une couche de matériau filtre, et une feuille inférieure (8), fabriquée à partir d'un matériau ne laissant pas passer la substance soluble (4), mais laissant passer la substance dissoute dans un liquide, telle qu'une couche de matériau filtre,
**caractérisée en ce que** la cartouche est en outre dotée d'un corps raidisseur conférant une forme (10), qui est placé entre la feuille supérieure (6) et la feuille inférieure (8), dans laquelle la feuille supérieure (6) et la feuille inférieure (8) s'étendent au moins en partie sensiblement parallèlement l'une à l'autre et vers une surface (12), dans laquelle le corps raidisseur (10) a un côté supérieur adjacent à la feuille supérieure (6) et un côté inférieur adjacent à la feuille inférieure (8) et, en y formant une configuration de paroi de compartimentage, a une structure de grille qui laisse passer un liquide du côté supérieur vers le côté inférieur, dans laquelle structure au moins une partie de la substance soluble (4) est logée et chaque compartiment formé par la configuration de paroi est entouré par cette configuration de paroi, la feuille supérieure (6) et la feuille inférieure (8).

2. Cartouche rigide selon la revendication 1,
**caractérisée en ce qu'**au moins une partie de la configuration de paroi de compartimentage est formée par une grille qui forme une pluralité de compartiments.

3. Cartouche rigide selon la revendication 1 ou 2,
**caractérisée en ce qu'**au moins une partie de la configuration de paroi de compartimentage est formée par une paroi en forme de spirale.

4. Cartouche rigide selon l'une quelconque des revendications précédentes, **caractérisée en ce que** chaque compartiment formé par la configuration de paroi, mesuré perpendiculairement à une partie de la configuration de paroi, a une largeur qui est plus petite qu'un tiers, de préférence plus petite qu'un quart, de manière davantage préférée plus petite qu'un sixième, de manière même davantage préférée plus petite qu'un huitième du diamètre hydraulique, dans laquelle le diamètre hydraulique signifie le quotient de quatre fois la surface de passage divisée par le périmètre de passage.

5. Cartouche rigide selon l'une quelconque des revendications précédentes, **caractérisée en ce que** chaque compartiment est délimité par une paroi unique.

6. Cartouche rigide selon l'une quelconque des revendications précédentes, **caractérisée en ce qu'**au moins un certain nombre des compartiments ont un profil n-gonal, dans lequel n est un nombre entier supérieur à deux.

7. Cartouche rigide selon les revendications 5 et 6,
**caractérisée en ce qu'**un certain nombre des compartiments forment une structure en nid d'abeille.

8. Cartouche rigide selon l'une quelconque des revendications 1 à 5, **caractérisée en ce qu'**au moins un certain nombre des compartiments ont une forme ronde ou ovale.

9. Cartouche rigide selon l'une quelconque des revendications précédentes, **caractérisée en ce que** le corps raidisseur est doté d'une paroi latérale verticale s'étendant autour de la configuration de paroi.

10. Cartouche rigide selon l'une quelconque des revendications précédentes, **caractérisée en ce que** le corps raidisseur est doté d'un bord horizontal s'étendant autour de la configuration de paroi.

11. Cartouche rigide selon l'une quelconque des revendications précédentes, **caractérisée en ce que** la feuille supérieure est fixée à un côté supérieur du corps raidisseur.

12. Cartouche rigide selon l'une quelconque des revendications précédentes, **caractérisée en ce que** la feuille supérieure est fixée à un côté supérieur de la configuration de paroi.

13. Cartouche rigide selon les revendications 9 et 11, **caractérisée en ce que** la feuille supérieure est fixée à un côté supérieur de la paroi latérale verticale.

14. Cartouche rigide selon la revendication 9,
**caractérisée en ce que** la feuille supérieure est fixée à un côté externe de la paroi latérale verticale.

15. Cartouche rigide selon la revendication 13 ou 14,
**caractérisée en ce que** la feuille supérieure est également fixée à un côté supérieur de la configuration de paroi.

16. Cartouche rigide selon la revendication 15,
**caractérisée en ce que** la feuille supérieure est fixée à quelques points du côté supérieur de la configuration de paroi.

17. Cartouche rigide selon l'une quelconque des revendications précédentes, **caractérisée en ce que** la feuille inférieure est fixée à un côté inférieur du corps raidisseur.

18. Cartouche rigide selon l'une quelconque des revendications précédentes, **caractérisée en ce que** la feuille inférieure est fixée à un côté inférieur de la configuration de paroi.

19. Cartouche rigide selon les revendications 9 et 17, **caractérisée en ce que** la feuille inférieure est fixée à un côté inférieur de la paroi latérale verticale.

20. Cartouche rigide selon la revendication 9,
**caractérisée en ce que** la feuille inférieure est fixée à un côté externe de la paroi latérale verticale.

21. Cartouche rigide selon la revendication 19 ou 20,
**caractérisée en ce que** la feuille inférieure est également fixée à un côté inférieur de la configuration de paroi.

22. Cartouche rigide selon la revendication 21,
**caractérisée en ce que** la feuille inférieure est fixée à quelques points du côté inférieur de la configuration de paroi.

23. Cartouche rigide selon l'une quelconque des revendications précédentes, **caractérisée en ce que** la feuille inférieure et la feuille supérieure sont inter-reliées et sont de préférence inter-reliées au niveau de leurs bords longitudinaux et sont de manière davantage préférée directement inter-reliées, dans laquelle les parties inter-reliées forment un joint.

24. Cartouche rigide selon l'une quelconque des revendications précédentes, **caractérisée en ce que** la cartouche a une forme plate, dans laquelle la cartouche a des dimensions plus grandes dans la direction de la surface que dans une direction perpendiculaire à la surface.

25. Cartouche rigide selon l'une quelconque des revendications précédentes, **caractérisée en ce que** le corps raidisseur est fabriqué à partir d'un matériau synthétique tel qu'une matière plastique, un métal, du carton, un caoutchouc et/ou un matériau biodégradable.

26. Cartouche rigide selon l'une quelconque des revendications précédentes, **caractérisée en ce que** la cartouche rigide a un profil en forme de disque.

27. Cartouche rigide selon l'une quelconque des revendications précédentes, **caractérisée en ce que** la feuille supérieure et/ou la feuille inférieure de la première couverture sont/est fabriquée(s) à partir de papier-filtre.

28. Cartouche rigide selon l'une quelconque des revendications 1 à 27, **caractérisée en ce que** la feuille supérieure de la première couverture est fabriquée au moins en partie à partir d'une feuille ne laissant pas passer un liquide, qui a été mise d'une manière amovible ou est fabriquée au moins en partie à partir d'un matériau filtre qui laisse passer un liquide tel que l'eau ou un extrait de café.

29. Cartouche rigide selon l'une quelconque des revendications précédentes, **caractérisée en ce que** le corps raidisseur comprend une pluralité de compartiments relativement petits situés à une distance relativement courte d'un bord circonférentiel du corps raidisseur et **en ce que** le corps raidisseur comprend une pluralité de compartiments relativement grands situés à une distance relativement longue du bord circonférentiel.

30. Cartouche rigide selon l'une quelconque des revendications précédentes, **caractérisée en ce que** le corps raidisseur comprend, au moins également, une pluralité de compartiments allongés dirigés au moins sensiblement parallèlement les uns aux autres.

31. Cartouche rigide selon l'une quelconque des revendications précédentes, **caractérisée en ce que**, entre la configuration de paroi et la feuille inférieure, la cartouche rigide est dotée d'au moins un espace récepteur qui est au moins en partie rempli de la substance solide.

32. Cartouche rigide selon l'une quelconque des revendications précédentes, **caractérisée en ce qu'**un côté supérieur du corps raidisseur est formé selon une surface convexe ou concave.

33. Cartouche rigide selon l'une quelconque des revendications précédentes, **caractérisée en ce qu'**un côté inférieur du corps raidisseur est formé selon une surface convexe ou concave.

34. Cartouche rigide selon l'une quelconque des revendications précédentes, **caractérisée en ce qu'**une dimension la plus petite d'un compartiment est plus petite qu'un tiers, de préférence plus petite qu'un quart, de manière davantage préférée plus petite qu'un sixième et de manière même davantage préférée plus petite qu'un septième d'un diamètre le plus petit de la cartouche.

35. Cartouche rigide selon l'une quelconque des revendications précédentes, **caractérisée en ce qu'**une dimension la plus petite d'un compartiment est plus petite que deux fois l'épaisseur de la cartouche.

36. Cartouche rigide selon l'une quelconque des revendications 34 ou 35, **caractérisée en ce que** les compartiments ayant lesdites dimensions s'étendent virtuellement sur au moins la cartouche entière.

37. Cartouche rigide selon l'une quelconque des revendications précédentes, **caractérisée en ce que** la cartouche est dotée d'au moins deux corps raidisseurs positionnés l'un au-dessus de l'autre.

38. Cartouche rigide selon la revendication 37,
**caractérisée en ce que** les corps raidisseurs sont disposés de telle sorte qu'ils sont décalés l'un par rapport à l'autre.

39. Cartouche rigide selon l'une quelconque des revendications précédentes, **caractérisée en ce que** la cartouche est en outre dotée d'une seconde couverture fabriquée au moins en partie à partir d'un matériau filtre en forme de feuille, dans laquelle est inclus un produit à extraire tel que du café moulu, dans laquelle la seconde couverture s'étend au-dessus ou en dessous de la première couverture sensiblement parallèlement à la surface.

40. Cartouche rigide selon la revendication 39,
**caractérisée en ce que** la seconde couverture est dotée d'une feuille supérieure fabriquée à partir d'un matériau filtre en forme de feuille et d'une feuille inférieure fabriquée à partir d'un matériau filtre en forme de feuille, dans laquelle la feuille supérieure et la feuille inférieure sont inter-reliées et sont de préférence inter-reliées au niveau de leurs bords longitudinaux et sont de manière davantage préférée directement inter-reliées, dans laquelle les parties inter-reliées forment un joint circulaire.

41. Cartouche rigide selon la revendication 40,
**caractérisée en ce que** la feuille inférieure de la seconde couverture est reliée à la première couverture.

42. Cartouche rigide selon la revendication 40 ou 41,
**caractérisée en ce que** la feuille inférieure de la seconde couverture est formée par la feuille supérieure de la première couverture.

43. Cartouche rigide selon l'une quelconque des revendications précédentes 39 à 42, **caractérisée en ce que** la feuille supérieure et/ou la feuille inférieure de la seconde couverture sont/est fabriquée(s) à partir de papier-filtre.

44. Cartouche rigide selon l'une quelconque des revendications 1 à 38, **caractérisée en ce que** la cartouche rigide est en outre dotée d'un support ayant un espace récepteur destiné à inclure une cartouche d'extraction remplie d'une substance à extraire telle que du café moulu ou du thé, dans laquelle la première couverture est située en dessous de l'espace récepteur et est en communication de fluide avec l'espace récepteur.

45. Cartouche rigide selon l'une quelconque des revendications précédentes, **caractérisée en ce qu'**au moins le côté inférieur du corps raidisseur est doté d'une partie bombée.

46. Cartouche rigide selon la revendication 45,
**caractérisée en ce que** la partie bombée est déterminée par une augmentation de la hauteur d'une partie de la configuration de paroi de compartimentage.

47. Cartouche rigide selon la revendication 45 ou 46,
**caractérisée en ce que** la partie bombée a une surface s'étendant en parallèle à la surface mentionnée ci-dessus.

48. Cartouche rigide selon la revendication 47,
**caractérisée en ce que** la surface forme une partie centrale de la configuration de paroi de compartimentage.

49. Cartouche rigide selon la revendication 48,
**caractérisée en ce que** la partie centrale est agencée d'une manière descendue par rapport à un bord inférieur d'une paroi circonférentielle du corps raidisseur de telle sorte que le côté inférieur de la configuration de paroi de compartimentage descend entre le bord de la surface centrale et le bord inférieur de la paroi circonférentielle par rapport à une ligne tracée entre ce bord de la surface centrale et ce bord inférieur de la paroi circonférentielle.

50. Cartouche rigide selon la revendication 49,
**caractérisée en ce que** la feuille inférieure s'étend sur la surface centrale et à partir du bord de celle-ci vers le bord inférieur de la paroi circonférentielle, lequel bord dépasse de préférence de manière annulaire, et est fixé sur ou près de celle-ci sur le corps raidisseur.

51. Cartouche rigide selon la revendication 50,
**caractérisée en ce que** la feuille inférieure s'étend en outre à partir d'une fixation sur le bord inférieur de la paroi circonférentielle le long de la paroi circonférentielle vers au moins un endroit proche d'un bord circonférentiel externe de la feuille supérieure et y est fixée sur ou près d'une fixation de la feuille supérieur sur le corps raidisseur.

52. Cartouche rigide selon la revendication 50,
**caractérisée en ce que** la feuille inférieure s'étend en outre à partir d'une fixation sur le bord inférieur de la paroi circonférentielle le long de la paroi circonférentielle et est reliée à la feuille supérieure pour former une couverture fermant complètement le corps raidisseur.

53. Cartouche rigide selon la revendication 51 ou 52,
**caractérisée en ce que** la feuille supérieure et/ou la feuille inférieure sont en outre allongées et y sont/est reliée(s) à une feuille supplémentaire pour former un espace récepteur fermé, dans lequel est inclus le produit à extraire, tel que du café moulu.

54. Cartouche rigide selon l'une quelconque des revendications précédentes, **caractérisée en ce que**, sur le corps raidisseur, est disposé un corps de séparation ayant un certain nombre de passages, plus particulièrement une plaque de distribution d'eau, telle qu'une plaque d'appui de douche.

55. Cartouche rigide selon la revendication 54,
**caractérisée en ce que** le corps de séparation forme au moins une partie de la feuille supérieure de la première couverture.

56. Cartouche rigide selon la revendication 54,
**caractérisée en ce que** le corps de séparation est placé au-dessus de la feuille supérieure de la première couverture.

57. Cartouche rigide selon la revendication 54,
**caractérisée en ce que** le corps de séparation est placé sous la feuille supérieure de la première couverture.

58. Cartouche rigide selon la revendication 56 ou 57,
**caractérisée en ce que** la feuille supérieure consiste en une couche de matériau filtre.

59. Cartouche rigide selon la revendication 57,
**caractérisée en ce que** la feuille supérieure consiste en une couche de matériau filtre ne laissant pas passer un liquide, qui est disposé de manière amovible.

60. Assemblage d'une cartouche rigide selon l'une quelconque des revendications précédentes 1 à 59 et d'une cartouche d'extraction fabriquée au moins en partie à partir d'un matériau filtre en forme de feuille qui est rempli d'un produit à extraire tel que du café moulu.

61. Assemblage selon la revendication 60,
**caractérisé en ce qu'**une taille de la cartouche d'extraction dans une direction de largeur de la cartouche d'extraction correspond au moins à une taille de la cartouche rigide dans une direction de ladite surface de la cartouche rigide.

62. Assemblage selon la revendication 61,
**caractérisé en ce qu'**une taille de la cartouche d'extraction dans une direction de largeur de la cartouche d'extraction est plus grande qu'une taille de la cartouche rigide dans une direction de ladite surface de la cartouche rigide.

63. Assemblage d'une cartouche rigide selon la revendication 61 ou 62, **caractérisé en ce que** la cartouche rigide et la cartouche d'extraction ont chacune la forme d'un disque rond, dans lequel la cartouche d'extraction a un diamètre qui est au moins aussi grand qu'un diamètre d'une cartouche rigide.

64. Assemblage selon la revendication 63,
**caractérisé en ce que** le diamètre de la cartouche d'extraction est plus grand que le diamètre de la cartouche rigide.

65. Assemblage selon l'une quelconque des revendications 60 à 64, **caractérisé en ce que** le matériau filtre en forme de feuille de la cartouche d'extraction est doté d'un papier-filtre.

66. Procédé de préparation d'une boisson propre à la consommation en utilisant une cartouche rigide ou un assemblage selon l'une quelconque des revendications précédentes, dans lequel une quantité de substance, telle que de la poudre/crème de lait, du sucre et des additifs similaires, soluble dans un liquide, tel que l'eau, logée dans la cartouche rigide comprenant une structure de grille laissant passer un liquide formée par une configuration de paroi de compartimentage dans un corps raidisseur couvert de manière fermée par une feuille supérieure et une feuille inférieure, de même qu'une quantité de substance à extraire, telle que du café moulu, logée dans une couverture, sont placées dans un support, ensuite, un liquide, tel que de l'eau chaude, est fourni au support, en particulier à partir d'un côté supérieur de celui-ci et de préférence sous pression, aux deux substances, après quoi la boisson obtenue de cette manière est utilisée via au moins une ouverture de sortie dans un côté inférieur du support.

67. Procédé selon la revendication 66, **caractérisé en ce que** le liquide est tout d'abord fourni à la substance à extraire, puis à la substance soluble.

68. Procédé selon la revendication 66, **caractérisé en ce que** le liquide est tout d'abord fourni à la substance soluble, puis à la substance à extraire.

69. Procédé selon la revendication 66, 67 ou 68,
**caractérisé en ce que** la cartouche rigide et la couverture sont combinées pour former un ensemble avant d'être placées dans le support.

70. Procédé selon la revendication 69, **caractérisé en ce que** la combinaison est effectuée d'une manière telle que la séparation entre la cartouche rigide et la couverture est formée par une unique couche filtre.

71. Procédé selon l'une quelconque des revendications 66 à 70, **caractérisé en ce que** la cartouche rigide est dotée d'une couche déchirable, qui est enlevée avant de fournir le liquide au support.

72. Procédé selon la revendication 71, **caractérisé en ce que** la couche déchirable est enlevée avant de placer la cartouche rigide dans le support et d'y placer la couverture dessus ou **en ce que** la couverture est placée dans le support et la cartouche rigide y est placée dessus, dans lequel la couche déchirable est enlevée avant ou après que la cartouche rigide est placée dans le support.

73. Procédé selon la revendication 71 ou 72,
**caractérisé en ce qu'**une cartouche rigide utilisée à partir de laquelle la couche a été déchirée est dotée d'un corps raidisseur conçu de telle sorte que celui-ci peut au moins en partie être rempli d'une substance soluble aux fins d'une réutilisation.

74. Procédé selon l'une quelconque des revendications précédentes 66 à 73, **caractérisé en ce que** la boisson obtenue est évacuée à travers une ouverture de sortie conçue en tant qu'ouverture à bec verseur d'une manière telle qu'une couche de mousse à petites bulles est obtenue.

75. Procédé selon l'une quelconque des revendications précédentes 66 à 74, **caractérisé en ce que** la cartouche rigide et le support sont inter-reliés avant que la couverture ne soit incluse dans le support.

76. Procédé selon la revendication 75, **caractérisé en ce que** la cartouche rigide et le support ont une conception intégrée.
